# EUROPEAN PATENT APPLICATION

(11) **EP 4 525 548 A1**
(43) Date of publication of application: **19.03.2025**
(21) Application number: 23802918.5
(22) Date of filing: 09.05.2023
(51) Int. Cl.: H04W 76/15, H04W 40/02

(54) **MULTI-PATH ESTABLISHMENT METHOD, TERMINAL, AND NETWORK SIDE DEVICE**

(30) Priority: 11.05.2022 CN 202210509929
(71) Applicant: Vivo Mobile Communication Co., Ltd., Dongguan, Guangdong 523863 (CN)
(72) Inventor: LIU, Jiamin, Dongguan, Guangdong 523863 (CN)
(74) Representative: Cabinet Beaumont
(86) International application number: PCT/CN2023/093040
(87) International publication number: WO 2023/217149

(57) **Abstract**

This application discloses a multi-path establishment method, a terminal, and a network side device, and belongs to the wireless communication field. The multi-path establishment method in an embodiment of this application includes: receiving, by a first terminal through a first path to a first base station, path addition signaling sent by the first base station, where the first path is a direct path between the first terminal and the first base station, the path addition signaling carries an identifier of a second terminal through which a second path passes, and the second path is an indirect path between the first terminal and the first base station.

## Description

### CROSS-REFERENCE TO RELATED APPLICATIONS

The present invention claims priority to Chinese Patent Application No. 202210509929.1, filed with the China National Intellectual Property Administration on May 11, 2022 and entitled "MULTI-PATH ESTABLISHMENT METHOD, TERMINAL, AND NETWORK SIDE DEVICE", which is incorporated herein by reference in its entirety.

### TECHNICAL FIELD

This application pertains to the field of wireless communication technologies, and specifically relates to a multi-path establishment method, a terminal, and a network side device.

### BACKGROUND

In a relay (Relay) technology in a wireless communication system, one or more relay nodes are added between a base station and a terminal, and are responsible for one or more times of forwarding of a wireless signal. That is, the wireless signal needs to pass through multiple hops to reach the terminal (also referred to as user equipment (User Equipment, UE)). A wireless relay technology can be used not only to extend cell coverage to compensate for blind points of cell coverage, but also to increase a cell capacity by means of spatial resource multiplexing. For indoor coverage, the relay technology can also overcome a penetration loss and improve indoor coverage quality.

Taking the simple two-hop relay as an example, a wireless relay divides one base station-terminal link into two links: base station-relay station and relay station-terminal, thus providing an opportunity to replace a poor-quality link with two better-quality links to obtain a higher link capacity and better coverage. For example, in a typical terminal-to-network (UE-to-Network) scenario, a remote terminal (Remote UE) needs to transmit data to a network side. However, because coverage is poor, a relay terminal (Relay UE) is found for relaying, where a Uu interface exists between the relay UE and the base station, and a sidelink (sidelink, SL) interface (also referred to as a PCS interface) exists between the relay UE and the remote UE.

In a related technology, between a terminal and a network side, one case is to establish a direct path (Direct path), that is, the terminal establishes a wireless link with the base station through an air interface Uu, and the other case is an indirect path (Indirect path), that is, the terminal (remote UE) establishes a wireless link with the base station by using another terminal (relay UE) and an air interface of the another terminal. When the terminal establishes the indirect path, a network needs to control the terminal to perform a relay UE discovery process only when a link condition is poor enough.

However, in some cases, to obtain better transmission quality, the terminal may need to simultaneously use a direct path (direct path) and an indirect path (indirect path), that is, the terminal communicates with the network side by using multiple paths. In a current technical solution, there is only a single-path establishment method, that is, a direct path is established or an indirect path is established. No multi-path establishment method is provided in the related technology.

### SUMMARY

Embodiments of this application provide a multi-path establishment method, a terminal, and a network side device, so that multi-path establishment can be implemented.

According to a first aspect, a multi-path establishment method is provided, including: receiving, by a first terminal through a first path to a first base station, path addition signaling sent by the first base station, where the first path is a direct path between the first terminal and the first base station, the path addition signaling carries an identifier of a second terminal through which a second path passes, and the second path is an indirect path between the first terminal and the first base station.

According to a second aspect, a multi-path establishment apparatus is provided, including: a first establishment module, configured to establish a first path with a first base station, where the first path is a direct path between the first terminal and the first base station; and a first receiving module, configured to receive path addition signaling sent by the first base station, where the path addition signaling carries an identifier of a second terminal through which a second path passes, and the second path is an indirect path between the first terminal and the first base station.

According to a third aspect, a multi-path establishment method is provided, including: sending, by a first base station, path addition signaling to a first terminal through a first path to the first terminal, where the first path is a direct path between the first terminal and the first base station, the path addition signaling carries an identifier of a second terminal through which a second path passes, and the second path is an indirect path between the first terminal and the first base station.

According to a fourth aspect, a multi-path establishment apparatus is provided, including: a second establishment module, configured to establish a first path with a first terminal, where the first path is a direct path between the first terminal and a first base station; and a first sending module, configured to send path addition signaling to the first terminal through the first path, where the path addition signaling carries an identifier of a second terminal through which a second path passes, and the second path is an indirect path between the first terminal and the first base station.

According to a fifth aspect, a multi-path establishment method is provided, including: receiving, by a second terminal, a first request sent by a first terminal, where the first request is used to request to establish a PC5 link with the second terminal.

According to a sixth aspect, a multi-path establishment apparatus is provided, including: a second receiving module, configured to receive a first request sent by a first terminal, where the first request is used to request to establish a PCS link with the second terminal.

According to a seventh aspect, a terminal is provided, where the terminal includes a processor and a memory, the memory stores a program or instructions capable of running on the processor, and the program or the instructions are executed by the processor to implement the steps of the method according to the first aspect or the method according to the fifth aspect.

According to an eighth aspect, a terminal is provided, including a processor and a communication interface, where the processor is configured to implement the steps of the method according to the first aspect, or implement the steps of the method according to the fifth aspect, and the communication interface is configured to communicate with an external device.

According to a ninth aspect, a network side device is provided, where the network side device includes a processor and a memory, the memory stores a program or instructions capable of running on the processor, and the program or the instructions are executed by the processor to implement the steps of the method according to the third aspect.

According to a tenth aspect, a network side device is provided, including a processor and a communication interface, where the processor is configured to implement the steps of the method according to the third aspect, and the communication interface is configured to communicate with an external device.

According to an eleventh aspect, a multi-path establishment system is provided, including: a first terminal, a second terminal, and a network side device, where the first terminal may be configured to perform the steps of the method according to the first aspect, the network side device may be configured to perform the steps of the method according to the third aspect, and the second terminal may be configured to perform the steps of the method according to the fifth aspect.

According to a twelfth aspect, a readable storage medium is provided, where the readable storage medium stores a program or instructions, and the program or the instructions are executed by a processor to implement the steps of the method according to the first aspect, the steps of the method according to the third aspect, or the steps of the method according to the fifth aspect.

According to a thirteenth aspect, a chip is provided, where the chip includes a processor and a communication interface, the communication interface is coupled to the processor, and the processor is configured to run a program or instructions to implement the steps of the method according to the first aspect, the steps of the method according to the third aspect, or the steps of the method according to the fifth aspect.

According to a fourteenth aspect, a computer program/a program product is provided, where the computer program/the program product is stored in a storage medium, and the computer program/the program product is executed by at least one processor to implement the steps of the method according to the first aspect, the steps of the method according to the third aspect, or the steps of the method according to the fifth aspect.

In the embodiments of this application, after establishing the first path with the first base station, the first terminal receives the path addition signaling sent by the first base station through the first path, so as to perform an operation of adding the second path between the first terminal and the first base station, so that multiple paths between the first terminal and the first base station can be established, and communication efficiency of the first terminal can be improved.

### BRIEF DESCRIPTION OF THE DRAWINGS

FIG. 1 is a block diagram of a wireless communication system applicable to an embodiment of this application;
FIG. 2 is a schematic flowchart of a multi-path establishment method according to an embodiment of this application;
FIG. 3 is another schematic flowchart of a multi-path establishment method according to an embodiment of this application;
FIG. 4 is still another schematic flowchart of a multi-path establishment method according to an embodiment of this application;
FIG. 5 is still another schematic flowchart of a multi-path establishment method according to an embodiment of this application;
FIG. 6 is still another schematic flowchart of a multi-path establishment method according to an embodiment of this application;
FIG. 7 is still another schematic flowchart of a multi-path establishment method according to an embodiment of this application;
FIG. 8 is a schematic structural diagram of a multi-path establishment apparatus according to an embodiment of this application;
FIG. 9 is another schematic structural diagram of a multi-path establishment apparatus according to an embodiment of this application;
FIG. 10 is still another schematic structural diagram of a multi-path establishment apparatus according to an embodiment of this application;
FIG. 11 is a schematic structural diagram of a communication device according to an embodiment of this application;
FIG. 12 is a schematic diagram of a hardware structure of a terminal according to an embodiment of this application; and
FIG. 13 is a schematic diagram of a hardware structure of a network side device according to an embodiment of this application

### DETAILED DESCRIPTION

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first" and "second" are used to distinguish between similar objects, but are unnecessarily used to describe a specific sequence or order. It should be understood that the terms in such a way are exchangeable in a proper case, so that the embodiments of this application described herein can be implemented in an order other than the order shown or described herein. In addition, objects distinguished by "first", "second", and the like are generally of one type, and a quantity of objects is not limited. For example, there may be one or more first objects. In addition, "and/or" in this specification and the claims represents at least one of the connected objects, and the character "/" generally represents an "or" relationship between the associated objects.

It should be noted that technologies described in embodiments of this application are not limited to a Long Term Evolution (Long Term Evolution, LTE)/LTE-Advanced (LTE-Advanced, LTE-A) system, and may be further applied to another wireless communication system such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency Division Multiple Access (Single-carrier Frequency Division Multiple Access, SC-LTE-A), and another system. The terms "system" and "network" in the embodiments of this application are often used interchangeably. The described technology may be used in the foregoing system and radio technology, or may be used in another system and radio technology. The following description describes a New Radio (New Radio, NR) system for example, and the NR term is used in most of the following descriptions. However, these technologies may also be applied to applications other than NR system applications, such as a 6th Generation (6^{th} Generation, 6G) communication system.

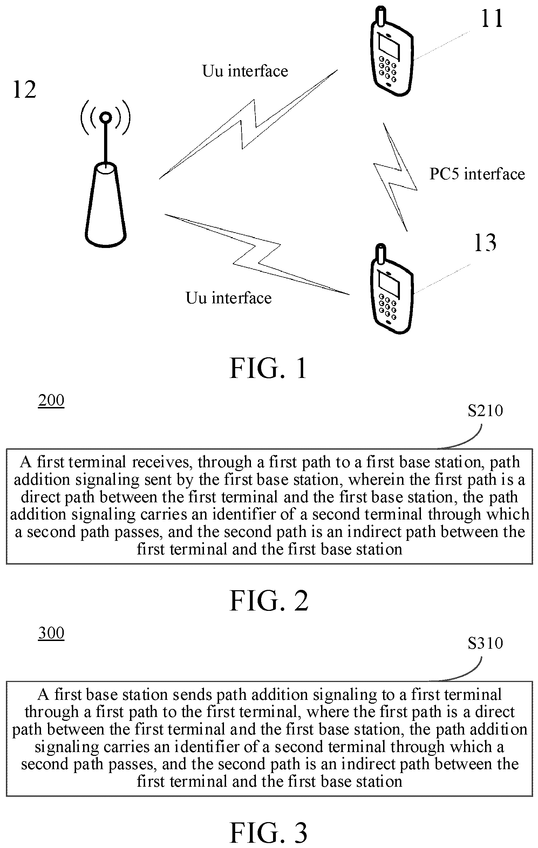

FIG. 1 is a block diagram of a wireless communication system applicable to an embodiment of this application. The wireless communication system includes a second terminal 11, a network side device 12, and a first terminal 13. In this embodiment of this application, communication may be performed between the first terminal 13 and the second terminal 11 through a PC5 (sidelink) interface, and communication is performed between both of the second terminal 11 and the first terminal 13 and the network side device 12 through a Uu interface.

The second terminal 11 may also be referred to as a relay (relay) terminal device or relay user equipment (User Equipment, UE), the first terminal 13 may also be referred to as a first terminal device or a remote (remote) UE, and the second terminal 11 and the first terminal 13 each may be a terminal side device such as a mobile phone, a tablet computer (Tablet Personal Computer), a laptop computer (Laptop Computer), a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), or a vehicle user equipment (Vehicle User Equipment, VUE), or a pedestrian user equipment (Pedestrian User Equipment, PUE). The wearable device includes: a band, a headset, glasses, and the like. It should be noted that, specific types of the second terminal 11 and the first terminal 13 are not limited in this embodiment of this application. The network side device 12 may be a base station or a core network. The base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (evolved Node B, eNB), a home Node B, a home evolved Node B, a wireless local area network (Wireless Local Area Network, WLAN) access point, a Wi-Fi node, a transmitting receiving point (Transmitting Receiving Point, TRP), or another suitable term in the field. Provided that a same technical effect is achieved, the base station is not limited to a specific technical term. It should be noted that in this embodiment of this application, only a base station in an NR system is used as an example, but a specific type of the base station is not limited.

With reference to the accompanying drawings, the following describes in detail, by using some embodiments and application scenarios thereof, a multi-path establishment method, a terminal, and a network side device provided in the embodiments of this application.

FIG. 2 is a schematic flowchart of a multi-path establishment method according to an embodiment of this application. The method 200 may be performed by a first terminal. In other words, the method may be performed by software or hardware installed on the first terminal. As shown in FIG. 2, the method may include the following steps.

S210. The first terminal receives, through a first path to a first base station, path addition signaling sent by the first base station, where the first path is a direct path between the first terminal and the first base station, the path addition signaling carries an identifier of a second terminal through which a second path passes, and the second path is an indirect path between the first terminal and the first base station.

In a multi-path establishment process, there may be two scenarios.

Scenario 1: A direct path may be first established between the first terminal and the first base station, and then an indirect path may be added. For example, after a remote UE first establishes a direct path, that is, after the remote UE establishes a first Uu direct path with a serving base station, the serving base station may send path addition signaling to the remote UE if another indirect path passing through the relay UE needs to be added, where the path addition signaling carries the identifier of the second terminal (for example, a relay UE), so that the remote UE adds a second path passing through the relay UE.

Scenario 2: An indirect path may be first established between the first terminal and the first base station. For example, the first terminal establishes an indirect path with the first base station by using the second terminal, and then a direct path is added between the first terminal and the first base station. For example, after the remote UE first establishes an indirect path, that is, after the remote UE first establishes a first SL relay link, namely, an indirect path with the serving base station of the relay UE by using the relay UE, if a Uu direct path needs to be added, in this case, because the remote UE is in a connected state, the serving base station of the relay UE may configure a measurement configuration of the remote UE by using dedicated signaling, and select, by means of measurement reporting, a cell that is in a candidate cell meeting a communication requirement and that is within its jurisdiction, that is, a cell of a same base station, and sends dedicated signaling to the remote UE for addition. That is, it is equivalent that the remote UE performs a secondary cell (Secondary Cell, Scell) addition-like or handover-like synchronization reconfiguration process, and performs random access to a specified cell (which may be non-contention-based random access) and completes reconfiguration, namely, a new path addition process. This entire process is controlled by a same serving base station of the remote UE and the relay UE. Therefore, it can be ensured, by using the base station, that the newly established second path is definitely located under the same base station.

The technical solutions provided in the embodiments of this application are mainly for the foregoing scenario 1.

In the technical solution provided in this embodiment of this application, before S210, the first terminal may establish a direct path with the first base station. Based on the direct path, data transmission may be performed between the first terminal and the first base station. For example, the remote UE establishes a direct path with the serving base station thereof, which may be used for basic data transmission.

In a possible implementation, before S210, the method may further include the following steps:

Step 1: The first terminal measures signal quality of a measurement object according to measurement configuration information sent by the first base station, where the measurement object includes: at least one adjacent terminal. For example, the adjacent terminal may be a relay UE around the first terminal.

Step 2: The first terminal sends a measurement result of at least one candidate terminal to the first base station, where the at least one candidate terminal is an adjacent terminal that is among the at least one adjacent terminal and that meets a reporting condition. The reporting condition may be configured in the measurement configuration information. For example, when reference signal received power (Reference Signal Received Power, RSRP) is higher than a predetermined value, the first terminal may report, to the first base station according to the measurement result, an adjacent terminal whose sidelink discovery RSRP (SL discovery RSRP, SD-RSRP) or sidelink RSRP (SideLink RSRP, SL-RSRP) meets a condition as a candidate terminal.

In a possible implementation, the first terminal may measure signal quality of the adjacent terminal based on discovery signaling sent by the adjacent terminal. Alternatively, the first terminal may measure the signal quality of the adjacent terminal based on a data signal transmitted by the adjacent terminal through a PCS interface.

For example, a measurement result of the relay UE by the remote UE may be measured based on a discovery (discovery) signal, or may be measured based on a data signal of an SL path established between the two UEs, that is, a sidelink discovery signal RSRP (SL discovery RSRP, SD-RSRP) or sidelink RSRP (SideLink RSRP, SL-RSRP) is measured.

In a possible implementation, when a discovery process is performed between the two UEs, the relay UE notifies the remote UE of serving cell information thereof in discovery signaling, and RRC state information may be additionally included. Therefore, in this possible implementation, the discovery signaling carries serving cell information of the adjacent terminal and/or radio resource control (Radio Resource Control, RRC) state information of the adjacent terminal, where the RRC state information indicates that the adjacent terminal is in an RRC connected state or the RRC state information indicates that the adjacent terminal is in an RRC non-connected state.

Optionally, the measurement result reported by the first terminal may further include serving cell information of the candidate terminal and/or RRC state information of the candidate terminal, so that the first base station can obtain the serving cell information and/or the RRC state information of the candidate terminal, and the first base station selects the second terminal for the second path of the first terminal.

In a possible implementation, after S210, the method may further include: The first terminal sends a first request to the second terminal based on the identifier of the second terminal, where the first request is used to request to establish a PCS link with the second terminal. In this possible implementation, after receiving the path addition signaling, the first terminal may send a request to the second terminal to request to establish a PCS link, so as to establish a second path.

In a possible implementation, to enable the second terminal to learn that a purpose of requesting by the first terminal to establish a PCS link is to establish a second path, target PCS signaling sent by the first terminal to the second terminal carries first indication information, where the first indication information indicates that a purpose of requesting to establish a PCS link is to add the second path to the first terminal, and the target PCS signaling includes the first request or PC5 signaling sent to the second terminal after the first request. For example, the first terminal may carry the first indication information in the sent first request, or may carry the first indication information in other PC5 signaling exchanged in a process of establishing a PCS link by the second terminal. In this possible implementation, the second terminal may learn that the purpose of requesting by the first terminal to establish the PCS link is to establish the second path. If the second terminal does not support establishment of the PC5 link for this purpose, the second terminal may directly reject the request of the first terminal.

In a possible implementation, after receiving the measurement result reported by the terminal, the first base station may obtain, based on a location of the first terminal, a first cell list recommended for access by the second terminal, and add the first cell list to the path addition signaling.

In addition, in a case in which the measurement result includes the serving cell information of the candidate terminal and/or the RRC state information of the candidate terminal, the first base station may further determine the first cell list based on the serving cell information of the candidate terminal and/or the RRC state information of the candidate terminal.

For example, a potential target relay UE (that is, the second terminal) is not controlled by the first base station, or an affiliation or an RRC state of the relay UE cannot be determined because of a lack of information, and only the relay UE can be selected first as a target relay for adding the second path. A relay UE ID is sent to the remote UE by using the path addition signaling, and the first cell list recommended for access by the second terminal is obtained according to at least one of the following: a location of the remote UE, a measurement result of the remote UE, and a frequency deployment and coverage status on a network side. A cell in the first cell list may be located in the same base station (that is, the first terminal) as the first terminal. For example, the cell in the first cell list may be a cell that provides good communication coverage for the relay UE.

In a possible implementation, after the first terminal sends the first request to the second terminal through the PCS interface, the method further includes: The first terminal receives a first response returned by the second terminal, and establishes a PCS link with the second terminal.

For example, after receiving the first request, the second terminal may directly accept the first request, interact with the second terminal to establish the PCS link.

In a possible implementation, after the first terminal sends the first request to the second terminal through the PCS interface, the method further includes: The first terminal receives first notification information sent by the second terminal through the PCS interface, where the first notification information indicates that the second path fails to be added.

For example, after receiving the first request, the second terminal may directly accept the first request, interact with the second terminal to establish the PC5 link, and report the PCS link to the serving base station of the second terminal. After receiving reporting information of the second terminal, the serving base station finds that the second terminal and the first terminal are not under a same serving base station. Therefore, the serving base station may send notification information to the second terminal, so as to indicate to reject the second terminal to add a second path in a role of a relay. After receiving the notification of the serving base station, the second terminal sends the first notification information to the first terminal.

In a possible implementation, the first notification information may further include a failure cause indication. For example, the failure cause indication in the first notification information is used to indicate that the second path fails to be added because the second terminal and the first terminal are under different serving base stations.

In a possible implementation, the first notification information may further include serving cell information of the second terminal. By using the serving cell information of the second terminal, the first terminal may determine that the second terminal and the first terminal are under different serving base stations, that is, the second path fails to be added because the second terminal and the first terminal are under different serving base stations.

For example, the first terminal may compare a serving cell identifier (Identifier, ID) of the first terminal with a serving cell ID of the second terminal to determine whether the second terminal and the first terminal are under the same serving base station. For example, a new radio cell global identifier (New Radio Cell Global Identifier, NCGI) has a total length of 48 bits (bit), where the first N bits represent a base station ID, and cells (cell) with the same first N bits (that is, highest N bits or N bits on the left) are under the same base station.

In a possible implementation, after the first terminal sends the first request to the second terminal through the PCS interface, the method further includes: The first terminal receives a second response sent by the second terminal, where the second response indicates that the second terminal rejects the first request.

For example, in a case in which the target PCS signaling carries the first cell list, the second terminal may determine whether a cell in the first cell list meets a cell selection or reselection condition. If no cell in the first cell list meets the cell selection or reselection condition, the second terminal may reject the PCS link establishment request of the first terminal.

For another example, if the target PC5 signaling carries serving cell information of the first terminal, the second terminal may perform determining on a cell selection or reselection condition of the serving cell of the first terminal. If the condition is not met, the second terminal may reject the PCS link establishment request of the first terminal. Alternatively, the second terminal may further select N cells that meet the condition according to the cell selection or reselection condition. If no cell in the cells is under a same base station as the serving cell of the first terminal, the second terminal may reject the PC5 link establishment request of the first terminal. Alternatively, when the second terminal is in a connected state and is different from a connected state of the first base station, the second terminal may directly reject the PCS link establishment request of the first terminal when receiving the first request.

For another example, after receiving the first request, the second terminal first reports the first request to the serving base station of the second terminal. After receiving the first request, the second terminal may directly accept the first request, interact with the second terminal to establish the PCS link, and report the PC5 link to the serving base station of the second terminal. After receiving reporting information of the second terminal, the serving base station finds that the second terminal and the first terminal are not under a same serving base station. Therefore, the serving base station may send notification information to the second terminal, so as to indicate to reject the second terminal to add a second path in a role of a relay. After receiving the notification of the serving base station, the second terminal sends the second response to the first terminal, that is, reject the PCS link establishment request of the first terminal.

In a case in which the first terminal receives the second response sent by the second terminal, a multi-path establishment process fails, the first terminal may report the failure to the first base station, and the multi-path establishment process ends. In the foregoing possible implementations, in a case in which the first terminal and the second terminal are under different base stations, multi-path establishment may be rejected, so that a problem of increasing complexity of the first terminal because the first terminal needs to support a dual-connectivity-like function in a case of establishing a second path when the first terminal and the second terminal are under different base stations may be avoided.

In one or more possible implementations, the method may further include the following steps:
Step 1: The first terminal receives second RRC reconfiguration signaling sent by the first base station, where the second RRC reconfiguration signaling is used to configure a PCS interface of the second path of the first terminal.
Step 2: The first terminal performs configuration of the second path based on the second RRC reconfiguration signaling.

For example, when both the serving base station of the first terminal and the serving base station of the second terminal are the first base station, when sending the path addition signaling to the first terminal, or after sending the path addition signaling to the first terminal, the first base station may send the second RRC reconfiguration signaling to the first terminal, so as to establish the second path of the first terminal.

For another example, after receiving the reporting information of the second terminal, the first base station may determine that the first terminal and the second terminal belong to the same serving base station (that is, the first base station) and send the second RRC reconfiguration signaling to the first terminal.

In a possible implementation, the method further includes: The first terminal receives a handover command sent by the first base station, where the handover command indicates the first terminal to hand over to a second base station, and the second base station is a serving base station of the second terminal; and the first terminal hands over to the second base station based on the handover command.

For example, in a case in which the second terminal indicated by the path addition signaling and the first terminal are under different base stations, that is, the first terminal is currently located under the first base station, and the serving base station of the second terminal is a second base station, and the first base station and the second base station are different base stations, the first base station may send a handover command to the first terminal to trigger the first terminal to hand over from the first base station to the second base station, so that the first terminal and the second terminal can be under the same base station, and a problem of increasing complexity of the first terminal because the first terminal needs to support a dual-connectivity-like function in a case of establishing a second path can be avoided.

In the foregoing possible implementations, after the first terminal is handed over to the second base station, the second base station may re-send path addition signaling to the first terminal, and the first terminal establishes a second path based on the new path addition signaling. Therefore, in a possible implementation, after the first terminal is handed over to the second base station, the method further includes: The first terminal receives path addition signaling sent by the second base station, where the path addition signaling may carry the identifier of the second terminal. Alternatively, the second base station may no longer send path addition signaling to the first terminal, and the first terminal establishes a second path based on first path addition signaling sent by the first base station.

In a possible implementation, after the first terminal is handed over to the second base station, the second base station may separately send RRC reconfiguration signaling to the first terminal and the second terminal. Therefore, in a possible implementation, after the first terminal is handed over to the second base station, the method further includes: The first terminal receives first RRC reconfiguration signaling sent by the second base station, and performs configuration of the second path based on the second RRC reconfiguration signaling, where the first RRC reconfiguration signaling is used to configure a PCS interface of the second path of the first terminal. By applying the configuration in the first RRC reconfiguration signaling, a PC5 interface and/or a Uu interface of the second path of the first terminal may be configured, so as to establish the second path between the first terminal and the second base station.

According to the foregoing technical solution provided in this embodiment of this application, when the second path is established for the first terminal, it may be determined that the first terminal and the second terminal through which the second path passes are located under the same serving base station, so as to avoid a problem of increasing complexity of the first terminal because the first terminal is required to support a dual-connectivity-like function in a case of establishing a second path when the first terminal and the second terminal are under different serving base stations is avoided.

FIG. 3 is another schematic flowchart of a multi-path establishment method according to an embodiment of this application. The method 300 may be performed by a first base station. In other words, the method may be performed by software or hardware installed on the first base station. The method is a method performed by a first base station corresponding to the method 200, and has an execution solution corresponding to the method 200. As shown in FIG. 3, the method may include the following steps.

S310. The first base station sends path addition signaling to a first terminal through a first path to the first terminal, where the first path is a direct path between the first terminal and the first base station, the path addition signaling carries an identifier of a second terminal through which a second path passes, and the second path is an indirect path between the first terminal and the first base station.

For example, the first base station and the first terminal may first establish a direct path (that is, the first path). Then, to obtain better communication, the first base station may send the path addition signaling to the first terminal through the first path, so as to establish an indirect path (that is, the second path) between the first terminal and the first base station.

In a possible implementation, before the first base station sends the path addition signaling to the first terminal through the first path to the first terminal, the method may further include the following steps:
Step 1: The first base station sends measurement configuration information to the first terminal, where the measurement configuration information indicates the first terminal to measure signal quality of at least one adjacent terminal.
Step 2: Receive a measurement result of at least one candidate terminal sent by the first terminal, where the at least one candidate terminal is an adjacent terminal that is among the at least one adjacent terminal and that meets a reporting condition.
Step 3: The first base station selects one candidate terminal from the at least one candidate terminal as the second terminal based on the measurement result.

For example, the first base station may select, based on the measurement result reported by the first terminal, one candidate terminal with best PCS link quality from the at least one candidate terminal as the second terminal. For example, in a case in which the measurement result includes SD-RSRP or SL-RSRP of at least one candidate terminal, the first base station may select a candidate terminal with highest SD-RSRP or SL-RSRP as the second terminal.

In a possible implementation, to enable the first base station to learn of serving cell information of the candidate terminal and/or RRC state information of the candidate terminal, so that the first base station selects a suitable second terminal, the measurement result may further include: the serving cell information of the candidate terminal and/or the RRC state information of the candidate terminal.

In a possible implementation, that the first base station selects one candidate terminal from the at least one candidate terminal as the second terminal based on the measurement result includes at least one of the following:
(1) The first base station selects a candidate terminal with best PCS link quality from the at least one candidate terminal as the second terminal. For example, in a case in which the measurement result includes SD-RSRP or SL-RSRP of the at least one candidate terminal, the first base station may select, based on the SD-RSRP or the SL-RSRP of each candidate terminal, a candidate terminal with best PCS link quality as the second terminal. In this manner, the first base station may select a candidate terminal with best PCS link quality as the second terminal, so that after the second path is subsequently established, the second terminal can provide better communication quality.
(2) In a case in which the at least one candidate terminal includes a candidate terminal in a connected state under the first base station, select a candidate terminal in a connected state under the first base station as the second terminal. The first base station selects a candidate terminal in the connected state under the first base station as the second terminal, so that it can be ensured that the first terminal and the second terminal are under the same serving base station, and complexity increase of the first terminal is avoided. In addition, the candidate terminal in the connected state is selected, thereby omitting a process in which the second terminal enters the connected state from a non-connected state. For example, when a second path is established for a remote UE (that is, the first terminal), and a target relay UE (that is, the second terminal) is a UE in a connected state that is under a same base station as the remote UE, the first base station can conveniently reconfigure the relay UE and the remote UE, separately send configuration information for adding a new indirect path, and establish multiple paths for the remote UE.
(3) In a case in which the at least one candidate terminal does not include a candidate terminal in a connected state under the first base station, select a candidate terminal in a non-connected state under the first base station from the at least one candidate terminal as the second terminal. The second base station selects a candidate terminal in the non-connected state under the first base station as the second terminal, so that it can be ensured that the first terminal and the second terminal are under the same serving base station, and complexity increase of the first terminal is avoided. For example, when a second path is established for the remote UE (that is, the first terminal), and the target relay UE is a UE in a non-connected state under the same base station as the remote UE, for example, in an idle (Idle) or inactive (Inactive) state, the first base station may also send reconfiguration signaling to the remote UE, which carries a relay UE identifier, for example, a layer 2 identifier (Layer 2 ID), and the remote UE initiates establishment of a PCS link (link) for a multi-path establishment purpose to the relay UE, and triggers the relay UE to enter a connected state, receive configuration information from the same base station, and establish multiple paths for the remote UE.
(4) In a case in which none of the at least one candidate terminal is under the first base station, select a candidate terminal in a non-connected state from the at least one candidate terminal as the second terminal.

Optionally, the path addition signaling further carries a first cell list recommended for access by the second terminal.

For example, when a second path is established for the remote UE (that is, the first terminal), and the target relay UE (that is, the second terminal) is a UE in a non-connected state that is under a different base station from the remote UE, for example, in an idle or an inactive state, the first base station may also send path addition signaling to the remote UE, which carries a relay UE identifier, for example, a Layer 2 ID. Optionally, a recommended serving cell list (that is, the first cell list) may also be carried, and the remote UE initiates establishment of a PC5 link for a multi-path establishment purpose to the relay UE, and sends the recommended serving cell list to the relay UE, or in a case in which there is no recommended cell list from a network side, the remote UE notifies the relay UE of a serving cell of the remote UE, and the relay UE selects, during cell search, a suitable cell that is under a same base station as much as possible, and triggers the relay UE to enter a connected state through a recommended cell or a suitable cell, receive configuration information from the same base station, and establish multiple paths for the remote UE.

(4) In a case in which none of the at least one candidate terminal is under the first base station and the at least one candidate terminal is in a connected state, select a candidate terminal in a connected state from the at least one candidate terminal as the second terminal.

In a possible implementation, the method further includes: The first base station sends a handover command to the first terminal, where the handover command indicates the first terminal to hand over to a second base station, and the second base station is a base station in which the second terminal is located.

For example, when a second path is established for the remote UE (that is, the first terminal), the target relay UE is a UE in a connected state under a different base station, and multiple paths are established for the remote UE, the first base station needs to hand over the remote UE to a base station of the relay UE, so that the second terminal through which the second path between the first terminal and the base station passes and the first terminal are under the same base station.

In another possible implementation, the method may further include: The first base station sends indication signaling to the second base station, so as to indicate the second base station to trigger the second terminal to be handed over to the first base station.

For example, when a second path is established for the remote UE (that is, the first terminal), the target relay UE is a UE in a connected state under a different base station, and multiple paths are established for the remote UE, the first base station may indicate the second base station to hand over the relay UE to the base station of the remote UE (that is, the first base station), so that the second terminal through which the second path between the first terminal and the base station passes and the first terminal are under the same base station.

In a possible implementation, after the first base station sends the path addition signaling to the first terminal through the first path to the first terminal, the method may further include: The first base station receives reporting information sent by the second terminal, where the reporting information includes the identifier of the second terminal and/or second indication information, and the second indication information indicates that the second terminal is to add a second path in a role of a relay.

For example, after receiving the path addition signaling, the first terminal may send the first request to the second terminal to request to establish a PC5 link. After receiving the first request, the second terminal may send the reporting information to the serving base station of the second terminal. If the serving base station of the second terminal is the first base station, the first base station receives the reporting information. By using the reporting information, the first base station may learn that the second terminal is to establish a PCS link with the first terminal, and may send corresponding configuration information to the second terminal.

In the foregoing possible implementations, to enable the first terminal to establish the second path passing through the second terminal, the method may further include one of the following:
(1) The first base station sends second RRC reconfiguration signaling to the first terminal, where the second RRC reconfiguration signaling is used to configure a PCS interface of the second path of the first terminal.
(2) The first base station sends third RRC reconfiguration signaling to the second terminal, where the third RRC reconfiguration signaling is used to configure a PCS interface and/or a Uu interface of the second path on the second terminal.

In a possible implementation, before the first base station sends the second RRC reconfiguration signaling to the first terminal, the method further includes: the first base station determines that both the first terminal and the second terminal are within a service range of the first base station.

For example, after selecting the second terminal for the first terminal, in a case in which the first terminal and the second terminal belong to the same base station (that is, the first base station), when sending the path addition signaling to the first terminal, the first base station may send the second RRC reconfiguration signaling to the first terminal, for example, indicate the first terminal to add a second path and indicate a configuration of the second path by using the same signaling. Alternatively, after sending the path addition signaling to the first terminal, the first base station may send the second RRC reconfiguration signaling to the first terminal, that is, first indicate, by using the path addition signaling, the first terminal to add a second path, and then indicate a configuration of the second path by using the second RRC reconfiguration signaling.

In addition, the first base station may further send third RRC reconfiguration signaling to the second terminal before or after sending the second RRC reconfiguration information. For example, when the second terminal and the first terminal are under the same base station, and the second terminal is in a connected state, the first base station may send the third RRC reconfiguration signaling to the second terminal before, after, or at the same time as sending the second RRC reconfiguration information.

For another example, after receiving the reporting information of the second terminal, the first base station may determine that the first terminal and the second terminal belong to the same serving base station (that is, the first base station), send the second RRC reconfiguration signaling to the first terminal, and send the third RRC reconfiguration signaling to the second terminal. For example, when the second terminal and the first terminal are under the same base station and the second terminal is in a non-connected state, the first base station sends a first path addition instruction to the first terminal; after receiving the first path addition instruction, the first terminal sends the first request to the second terminal; after receiving the first request, the second terminal sends the reporting information to the first base station; and after receiving the reporting information, the first base station determines that the first terminal and the second terminal belong to the same serving base station (that is, the first base station), sends the second RRC reconfiguration signaling to the first terminal, and sends the third RRC reconfiguration signaling to the second terminal.

In another possible implementation, in a case in which the first base station determines that the first terminal and the second terminal are not within a service range of the same serving base station (that is, the first base station), the first base station determines that the second path fails to be added. For example, in a case in which the second terminal selected by the first base station and the first terminal are under different serving base stations, after receiving the first request sent by the first terminal, the second terminal sends the reporting information to the serving base station (not the first base station, assuming the second base station ) of the second terminal. After receiving the reporting information and determining that a path addition request of using the second terminal as a terminal through which the second path passes, the second base station sends notification information to the second terminal, to indicate that the second path fails to be added. After receiving the notification information, the second terminal may send a corresponding notification to the first terminal, and after receiving the notification, the first terminal may report the notification to the first base station, so that the first base station can determine that the second path fails to be added because the first terminal and the second terminal are not under the same serving base station.

According to the technical solution provided in this embodiment of this application, the first base station may select, for the first terminal, the second terminal under the same serving base station, or hand over the first terminal or the second terminal to the same base station, so as to ensure that the first terminal and the second terminal are under the same serving base station, thereby avoiding a problem that complexity of the first terminal increases because a second path is added. In addition, the first base station may further perform path addition failure processing on a case in which the first terminal and the second terminal are not under the same serving base station, so that the second terminal that is not under the same serving base station as the first terminal can be prevented from being used as a terminal through which the second path of the first terminal passes.

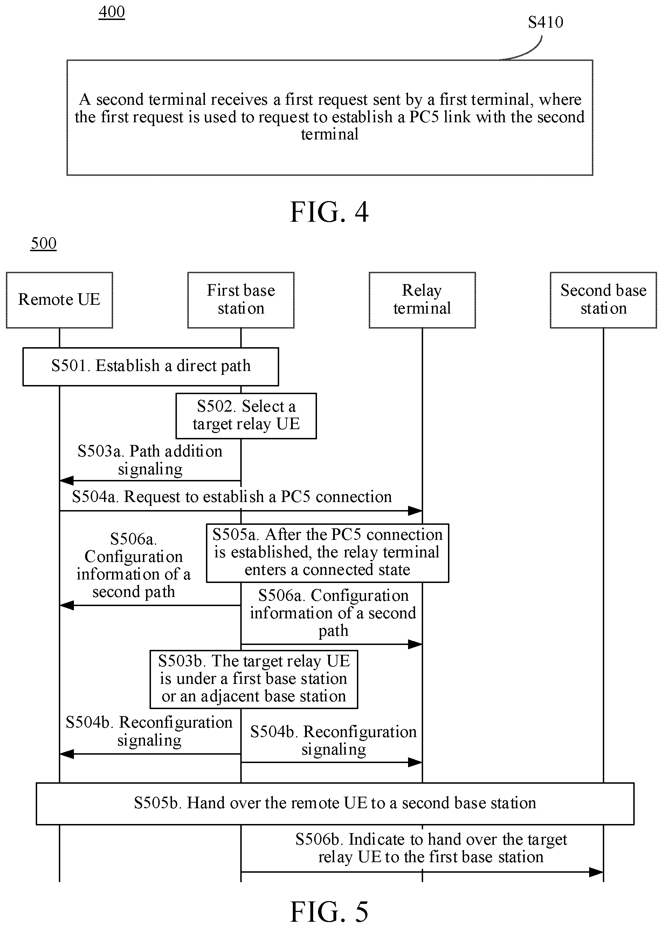

FIG. 4 is still another schematic flowchart of a multi-path establishment method according to an embodiment of this application. The method 400 may be performed by a second terminal. In other words, the method may be performed by software or hardware installed on the second terminal. The method is a method performed by a second terminal corresponding to the method 400, and has an execution solution corresponding to the method 200. As shown in FIG. 4, the method may include the following steps.

S410. The second terminal receives a first request sent by a first terminal, where the first request is used to request to establish a PC5 link with the second terminal.

In this embodiment of this application, after receiving path addition signaling sent by a first base station through first path, the first terminal may send the first request to the second terminal, that is, the first request is sent by the first terminal after receiving the path addition signaling sent by the first base station through the first path. The first path is a direct path between the first terminal and the first base station, the path addition signaling carries an identifier of a second terminal through which a second path passes, and the second path is an indirect path between the first terminal and the first base station.

In a possible implementation, to enable the second terminal to learn that a purpose of requesting by the first terminal to establish a PCS link is to establish a second path, target PCS signaling sent by the first terminal to the second terminal carries first indication information, where the first indication information indicates that a purpose of requesting to establish a PCS link is to add the second path to the first terminal, and the target PCS signaling includes the first request or PC5 signaling sent to the second terminal after the first request. For example, the first terminal may carry the first indication information in the sent first request, or may carry the first indication information in other PC5 signaling exchanged in a process of establishing a PCS link by the second terminal. In this possible implementation, the second terminal may learn that the purpose of requesting by the first terminal to establish the PCS link is to establish the second path. If the second terminal does not support establishment of the PC5 link for this purpose, the second terminal may directly reject the request of the first terminal.

In a possible implementation, the target PCS signaling further carries at least one of the following: a first cell list recommended for access by the second terminal and serving cell information of the first terminal.

In a possible implementation, after the second terminal receives the first request sent by the first terminal, the method further includes one of the following:
(1) In a case in which a cell in the first cell list meets a cell selection condition or a cell reselection condition, the second terminal in a non-connected state selects, from the first cell list, a cell that meets the cell selection condition or the cell reselection condition as a serving cell for which the second terminal initiates connection establishment.

For example, in a case in which the first terminal provides the first cell list by using the target PCS signaling, because a cell in the first cell list is from the first base station, it is determined that the cell in the first cell list is a possible coverage cell under the same base station as the first terminal, the second terminal may determine, for the cell in the first cell list, whether a cell selection or reselection condition is met, and select a cell that is in the first cell list and that meets the condition as a serving cell for which the second terminal initiates connection establishment. When more than one cell in the first cell list meets the condition, the second terminal may select a cell with best link quality as a serving cell, or the second terminal randomly selects one of the cells as a serving cell for which the second terminal initiates connection establishment. Therefore, it can be ensured that the serving cell connected to the second terminal is within the service range of the serving base station (that is, the first base station) of the first terminal, that is, the first terminal and the second terminal are under the same base station.

(2) In a case in which a serving cell of the first terminal meets the cell selection condition or the cell reselection condition, the second terminal in a non-connected state selects the serving cell of the first terminal as a serving cell for which the second terminal initiates connection establishment.

For example, in a case in which the first terminal provides the serving cell information of the first terminal by using the target PCS signaling, the second terminal may attempt to perform determining on a cell selection or reselection condition of the serving cell. When the condition is met, the serving cell is selected as a serving cell for which the second terminal initiates connection establishment.

Optionally, if the serving cell of the first terminal cannot meet the cell selection or reselection condition of the second terminal, the second terminal may select N cells that meet the condition according to the cell selection or reselection condition, and in these cells, select a cell that may be under the same base station as the serving cell of the first terminal, and use the cell as a serving cell for which the second terminal initiates connection establishment.

Determining whether a serving cell that meets the condition is under the same base station as the serving cell of the first terminal may be implemented by comparing cell IDs. For example, an NCGI has a total length of 48 bits, the first N bits represent a base station ID, and a cell with the same first N bits (highest N bits or N bits on the left) is under a same base station. A specific value of N depends on an actual deployment requirement of a network side. In a case in which the second terminal cannot learn of the specific value of N, the second terminal may select, as far as possible, a cell with more same bit digits in the front of two cell IDs as a serving cell for which the second terminal initiates connection establishment.

In a case in which the first terminal does not provide the foregoing information, the second terminal may initiate connection establishment according to a normal process.

In a possible implementation, after the second terminal receives the first request sent by the first terminal, the method may further include: In a case in which a second base station on which the second terminal in a connected state is located is different from the first base station, the second terminal sends a rejection response to the first terminal, where the rejection response indicates that the second terminal rejects a PCS link establishment request. For example, when the relay UE receives the first request sent by the remote UE, the relay UE is already in a connected state, and is in a connected state with a different base station from that of the remote UE. When the relay UE receives a PCS connection establishment request for a multi-path establishment purpose from the remote UE, the relay UE may directly reject the remote UE, and a multi-path establishment process fails.

In a possible implementation, before the second terminal receives the first request sent by the first terminal, the method further includes the following steps:
Step 1: The second terminal receives a handover command sent by a second base station, where the handover command indicates the second terminal to hand over from the second base station to the first base station.
Step 2: The second terminal hands over to the first base station.

For example, when the first base station determines that the second terminal and the first terminal are under different serving base stations, the first base station may send indication information to the second base station to indicate the second base station to hand over the second terminal to the first base station. After receiving the indication information, the second base station may send a handover command to the second terminal to indicate the second terminal to hand over from the second base station to the first base station. After receiving the handover command, the second terminal performs a handover operation to hand over to the first base station, so that the first terminal and the second terminal can be under the same base station.

In a possible implementation, after the second terminal receives the first request sent by the first terminal, the method may further include: The second terminal sends reporting information to a second base station, where the second base station is a serving base station of the second terminal, the reporting information includes an identifier of the second terminal and second indication information, and the second indication information indicates that the second terminal is to add a second path in a role of a relay.

In a possible implementation, after the second terminal sends the reporting information to the second base station, the method further includes one of the following:
(1) The second terminal receives third RRC reconfiguration signaling sent by the second base station, where the third RRC reconfiguration signaling is used to configure a PC5 interface and/or a Uu interface of the second path on the second terminal. For example, when the second base station and the first base station are the same base station, after receiving the reporting information sent by the second terminal, the second base station determines that the identifier of the second terminal carried in the reporting information is the same as the identifier of the second terminal in the path addition signaling sent by the second base station to the first terminal, and sends the third RRC reconfiguration signaling to the second terminal.
(2) The second terminal receives second notification information sent by the second base station, where the second notification information indicates that addition of a second path by the second terminal in a role of a relay is rejected. For example, in a case in which the second base station and the first base station are different base stations, after receiving the reporting information sent by the second terminal, the second base station determines that the path addition signaling that carries the identifier of the second terminal was not sent, and sends the second notification information to the second terminal.

In a possible implementation, after the second terminal receives the second notification information sent by the second base station, the method may further include one of the following:
(1) The second terminal sends first notification information to the first terminal through a PCS interface, where the first notification information indicates that the second path fails to be added. For example, after receiving the first request, the second terminal may interact with the first terminal to establish a PCS link, and then send the reporting information to the second base station. After receiving the second notification information sent by the second terminal, the second terminal sends the first notification information to the first terminal through the PCS interface, so that the first terminal can learn that the second path fails to be established.
(2) The second terminal sends a rejection response to the first terminal, where the rejection response indicates that the second terminal rejects the first request.

For example, after receiving the first request, the second terminal may temporarily not establish a PCS link, and send the reporting information to the second base station. After receiving the second notification information sent by the second base station, the second terminal rejects the request of the first terminal, that is, rejects establishing the PCS link with the first terminal.

In a possible implementation, the second notification information may include at least one of the following:
a rejection cause indication, for example, indicating that the second terminal and the first terminal are under different base stations; and
serving cell information of the second terminal, for example, a serving cell ID of the second terminal.

Similarly, the first notification information further includes at least one of the following:
a failure cause indication, for example, indicating that the second terminal and the first terminal are under different base stations; and
serving cell information of the second terminal, for example, a serving cell ID of the second terminal.

In the foregoing possible implementations, the first terminal may learn of the failure cause of second path establishment and/or the serving cell information of the second terminal, which may further be reported to the first base station.

According to the technical solution provided in this embodiment of this application, after receiving the request from the first terminal, the second terminal may select a suitable cell to access or perform handover, so that the first terminal and the second terminal are under the same base station, or in a case in which the first terminal and the second terminal are under different base stations, perform failure processing on second path addition, so to avoid a case that after the second path is established for the first terminal, the first terminal and the second terminal are under different base stations.

The following describes the technical solutions provided in the embodiments of this application by using specific embodiments.

FIG. 5 is still another schematic flowchart of a multi-path establishment method according to an embodiment of this application. As shown in FIG. 5, the method 500 mainly includes the following steps.

S501. A remote UE establishes a direct (direct) path to a serving base station (that is, a first base station) of the remote UE.

The direct path may be used for basic data transmission. The first base station may configure the remote UE to perform specific measurement based on the direct path to collect a measurement result of a surrounding cell and a relay UE.

Optionally, the measurement result of the relay UE by the remote UE may be measured based on a discovery signal, or may be measured based on a data signal of an SL path established between the two UEs, that is, SD-RSRP (SL discovery RSRP) or SL-RSRP (SideLink RSRP) of the relay UE may be included in the measurement result. When the discovery process is performed between the two UEs, the relay UE may notify the remote UE of serving cell information of the relay UE in discovery signaling. In addition, the discovery signaling may further include RRC state information of the relay UE. When reporting the measurement result to a serving cell of the remote UE, the remote UE may additionally carry the serving cell information and the RRC state information of the relay UE, so that the base station performs better determining.

S502. When determining to add a new indirect path to the remote UE, the serving base station (that is, the first base station) of the remote UE selects a target relay UE.

In this possible implementation, when selecting the target relay UE, the first base station may fully consider the serving cell information of the relay UE. Specifically, the following cases may be considered:

Case (Case) 1: When a potential target relay UE is a UE in a connected state under a same base station, the base station may conveniently reconfigure the relay UE and the remote UE, and separately send configuration information of adding a new indirect path, and establish multiple paths for the remote UE.

Case 2: When a potential target relay UE is a UE in a non-connected state under the same base station, for example, in an idle or an inactive state, the first base station may also send reconfiguration signaling to the remote UE, which carries a relay UE identifier, for example, a Layer 2 ID, and the remote UE initiates establishment of a PCS link for a multi-path establishment purpose to the relay UE, and triggers the relay UE to enter a connected state, receive configuration information from the same base station, and establish multiple paths for the remote UE.

Case 3: When a potential target relay UE is a UE in a connected state under a different base station, and multiple paths are established for the remote UE, the remote UE may be handed over to a base station of the relay UE, or the relay UE is handed over to the base station of the remote UE, and an interaction operation between the base stations is involved. A delay is relatively long, and a signaling process is relatively complex, which may be avoided as far as possible during initial selection.

Case 4: When a potential target relay UE is a UE in a non-connected state under a different base station, for example, in an idle or inactive state, the first base station may also send reconfiguration signaling to the remote UE, which carries a relay UE identifier, for example, a Layer 2 ID. Optionally, a recommended serving cell list may also be carried, and the remote UE initiates establishment of a PCS link for a multi-path establishment purpose to the relay UE, and sends the recommended serving cell list to the relay UE, or in a case in which there is no recommended cell list from a network side, the remote UE notifies the relay UE of a serving cell of the remote UE, and the relay UE selects, during cell search, a suitable cell that is under a same base station as much as possible, and triggers the relay UE to enter a connected state through a recommended cell or a suitable cell, receive configuration information from the same base station, and establish multiple paths for the remote UE.

According to the foregoing different cases, different step branches can be executed, which are described in detail below.

First branch: When a potential target relay UE is not a UE in a connected state under the same base station (without Xn interaction), a characteristic of the branch is that the potential target relay UE is not controlled by the current base station, or because an affiliation or an RRC state of the relay UE cannot be determined due to a lack of information, the following S503a to S506a may be performed.

S503a: The first base station sends path addition signaling to the remote UE, where the path addition signaling carries a relay terminal ID (relay UE ID).

The potential target relay UE is not controlled by the current base station, or because the first base station cannot determine the affiliation or the RRC state of the relay UE because of a lack of information, only the relay UE can be selected as a target relay for adding a second path, and the path addition signaling that carries the relay UE ID is sent to the remote UE.

Optionally, the first base station may add a first cell list to the path addition signaling according to at least one of the following: a location of the remote UE, a measurement result of the remote UE, and a frequency deployment and coverage status on a network side, where cells in the first cell list may be cells within a service range of the first base station, and these cells may provide good communication coverage for the relay UE.

S504a: The remote UE receives target relay ID information sent by the first base station, learns that the first base station attempts to add a second path to the remote UE by using the target relay UE, requests to establish a PC5 connection to the target relay UE through a PCS interface, and sends, to a second terminal in an establishment process, purpose information indicating addition of a second path, optionally, which may further carry a recommended first cell list or serving cell information of the remote UE.

S505a: The relay UE receives a connection establishment request and optional additional information from the remote UE through the PCS interface, and prepares to trigger a connection establishment process to enter a connected state when or after PC5 connection establishment is completed.

A serving cell selection of the relay UE may be as follows:
(1) When the remote UE provides a recommended cell list, generally, these recommended cells come from the base station and have been determined by the base station as possible coverage cells under the same base station. Therefore, the relay UE can determine whether the cell in the list meets a cell selection or reselection condition, and select a cell in the list that meets the condition as a serving cell for which the relay UE initiates connection establishment. When more than one cell in the list meets the conditions, a cell with best link quality may be selected or the relay UE selects any cell thereof as a serving cell for which the relay UE initiates connection establishment.
(2) When the remote UE provides its own serving cell, the relay UE may attempt to perform determining on the cell selection or reselection condition for the serving cell. When the condition is met, the relay UE selects the serving cell as a serving cell for which the relay UE initiates connection establishment.

If the serving cell of the remote UE does not meet the cell selection or reselection condition for the relay UE, the relay UE may select N cells that meet the condition according to the cell selection or reselection condition, and select, from these cells, a cell that may be under the same base station as the serving cell of the remote UE as a serving cell for which the relay UE initiates connection establishment.

Determining whether the cell is under the same base station is implemented by comparing cell IDs. For example, an NCGI has a total length of 48 bits, the first N bits represent a base station ID, and a cell with the same first N bits (highest N bits or N bits on the left) is under a same base station. However, a specific value of N depends on an actual deployment requirement of a network side. Generally, the UE cannot learn of the specific value, and the UE can only guess the specific value. That is, the relay UE selects, as far as possible, a cell with more same bit digits in the front of two cell IDs as a serving cell for which the relay UE initiates connection establishment.

If the remote UE does not provide the above information, the relay UE initiates connection establishment according to a normal process.

Optionally, when the relay UE is already in a connected state, and is in a connected state with a different base station from that of the remote UE. When the relay UE receives a PCS connection establishment request for a multi-path establishment purpose from the remote UE, the relay UE may directly reject the remote UE, and a multi-path establishment process fails.

S506a: After the relay UE enters the connected state and is under the same base station as the remote UE, the first base station separately sends configuration information of a second path to the two UEs, to establish multi-path transmission for the remote UE.

Second branch: When the potential target relay UE is in a connected state (with Xn interaction), a characteristic of the branch is that the potential relay UE is directly or indirectly controlled by the serving base station of the current remote UE, for example, is directly a UE in a connected state under the current base station or a UE in a connected state under an adjacent base station (the second base station). The following S503b to S506b may be performed.

S503b. The first base station determines whether the potential target relay UE is a UE in a connected state under the first base station or a UE in a connected state under an adjacent base station, and if the potential target relay UE is a UE in a connected state under the first base station, performs S504b. In a case in which the potential target UE is a UE in a connected state under an adjacent base station, S505b is performed, and the remote UE is handed over to an adj acent base station; or if the first base station finds that the remote UE does not meet a condition of handing over to the adjacent base station, S506b may be performed.

S504b. The first base station separately sends reconfiguration signaling to the relay UE and the remote UE, and notifies the two UEs to establish a second indirect link for the remote UE through a relay link, so as to ensure that the remote UE can perform multi-path transmission.

S505b. The first base station may decide, according to a measurement status of a neighboring cell of the remote UE, to hand over the remote UE to an adjacent base station, and at the same time, may negotiate, through an Xn interface, configurations of the direct link and the indirect link of the adjacent base station (the second base station), or first hand over the direct link to the adjacent base station, and then the adjacent base station adds an indirect link to the remote UE as a second path, so that the remote UE can perform multi-path transmission.

S506b. The first base station negotiates with the adjacent base station (the second base station) whether the target relay UE can be handed over to a source base station, so that the relay UE is handed over to the first base station, the first base station configures a communication path of the relay UE on the first base station, and adds a second indirect path to the remote UE, so that the remote UE can perform multi-path transmission.

According to the foregoing technical solution provided in this embodiment of this application, to ensure that the serving cell of the remote UE and the serving cell of the relay UE in the established dual-path are under the same base station, when a new path is added, the relay UE or the second terminal (Secondary UE) establishes a connection according to a specified cell or by selecting a suitable cell, for example, the serving cell (serving cell) of the remote UE or another cell under the same base station, or the base station delivers a suitable cell to the relay UE by using signaling to the remote UE, so that the remote UE transfers the suitable cell to the relay UE to be used by the relay UE for access, so that the second path can be added under the same base station as far as possible, so as to avoid that the remote UE needs to support a dual-connectivity-like function, which brings additional complexity.

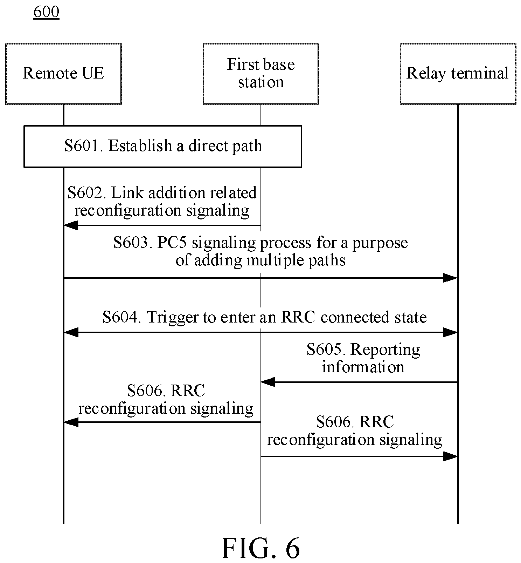

FIG. 6 is still another schematic flowchart of a multi-path establishment method according to an embodiment of this application. As shown in FIG. 6, the method 600 mainly includes the following steps.

In this embodiment, it is attempted not to change a process of cell selection/reselection/cell access of a relay UE, so as to achieve a process of adding a second path.

S601: A remote UE establishes a direct path to a serving base station (that is, a first base station) of the remote UE.

The direct path may be used for basic data transmission. The base station may configure the remote UE to perform specific measurement based on the direct path to collect a measurement result of a surrounding cell and a relay UE.

When the serving base station of the remote UE decides to add a new indirect path to the remote UE, only a link quality condition between the relay UE and the remote UE is considered when a target relay UE is selected. For example, only one relay UE around the remote UE meets a basic PC5 communication condition and may provide a second path for the remote UE for auxiliary transmission.

For an RRC state problem of the relay UE, if the relay UE happens to be a UE in a connected state under a same serving base station as the remote UE, the serving base station may separately send a reconfiguration message to the relay UE and the remote UE by using RRC reconfiguration signaling, so as to perform various configuration on the second path of the remote UE.

For example, for the remote UE, the serving base station configures the following information:
1. PC5 radio link control (Radio Link Control, RLC) channel configuration on the remote UE side;
2. Mapping relationship between an end-to-end (The end-to-end, E2E) radio bearer (Radio Bearer, RB) and a PC5 RLC channel (channel) of the remote UE;
3. Local identification ID, in the relay UE, of the remote UE used for a PCS interface;
4. Adaptation layer configuration used for the PCS interface.

For the relay UE, the serving base station configures the following information:
1. PCS RLC channel configuration on the relay UE side;
2. Mapping relationship between an E2E RB and a PC5 RLC channel of the remote UE;
3. Local identification ID, in the relay UE, of the remote UE used for a PCS interface;
4. Adaptation layer configuration used for the PCS interface.

In addition, the serving base station may further configure the following for the relay UE:
1. Uu RLC channel configuration;
2. Mapping relationship between an E2E RB and a Uu RLC channel of the remote UE;
3. Local identification ID, in the relay UE, of the remote UE used for a Uu interface;
4. Adaptation layer configuration used for the Uu interface.

In this case, the second path can be added successfully through implementation by the serving base station, thereby establishing multi-path transmission for the remote UE.

In the following steps, the relay UE is not in a connected (Connected) state under the same base station. For example, the relay UE is in an idle/inactive state, or even the relay UE is in a connected state under another base station.

S602: After selecting a relay UE, the serving base station of the remote UE sends reconfiguration signaling related to link addition to the remote UE, where the reconfiguration signaling carries a relay UE identifier, for example, a Layer-2 ID.

S603: The remote UE performs, according to the relay UE ID sent by the serving base station, a PC5 signaling process for a purpose of adding multiple paths to the relay UE, for example, a PC5-S connection establishment/PC5 RRC connection establishment process.

S604: Upon receiving a request of the PC5-S connection establishment/PCS RRC connection establishment process of the remote UE, the relay UE immediately triggers to enter an RRC connected state, where a current camped cell of the relay UE is a cell for which the relay UE selects to perform an RRC connection establishment request, that is, the relay UE does not perform an operation of cell reselection or changing an accessed cell, but directly enters a connected state from the camped cell according to a process of the original UE.

S605: When the camped cell of the relay UE happens to be under the same base station as the serving cell of the remote UE, the relay UE that enters the connected state reports the Layer-2 ID of the relay UE by using sidelink user equipment information (Sidelink UE Information, SUI) or user equipment assistance information (UE Assistance information, UAI), and carries a second path addition purpose in a role of a relay, that is, the relay UE needs to explicitly notify the network that the relay UE reports the Layer-2 ID this time, and does not perform normal PCS communication, nor serves as a relay UE in the relay link, but serves as a relay in a multi-path scenario, so that the network side can identify the purpose.

S606: The serving base station receives an explicit report of the relay UE, learns that the relay UE is a target relay UE that is previously sent by the serving base station to the remote UE for path addition, and that the relay UE happens to be connected to the same serving base station; in this case, the relay UE and the remote UE enter a state of two connected-state UEs that are controlled by the same serving base station, and the serving base station may separately send a reconfiguration message to the relay UE and the remote UE by using RRC reconfiguration signaling, so as to perform various configuration on a second path of the remote UE. Therefore, adding a second path can be successfully completed, and multi-path transmission is established for the remote UE.

For example, for the remote UE, the serving base station configures the following information:
1. PC5 radio link control (Radio Link Control, RLC) channel configuration on the remote UE side;
2. Mapping relationship between an E2E RB and a PC5 RLC channel of the remote UE;
3. Local identification ID, in the relay UE, of the remote UE used for a PCS interface;
4. Adaptation layer configuration used for the PCS interface.

For the relay UE, the serving base station configures the following information:
1. PCS RLC channel configuration on the relay UE side;
2. Mapping relationship between an E2E RB and a PC5 RLC channel of the remote UE;
3. Local identification ID, in the relay UE, of the remote UE used for a PCS interface;
4. Adaptation layer configuration used for the PCS interface.

In addition, the serving base station may further configure the following for the relay UE:
1. Uu RLC channel configuration;
2. Mapping relationship between an E2E RB and a Uu RLC channel of the remote UE;
3. Local identification ID, in the relay UE, of the remote UE used for a Uu interface;
4. Adaptation layer configuration used for the Uu interface.

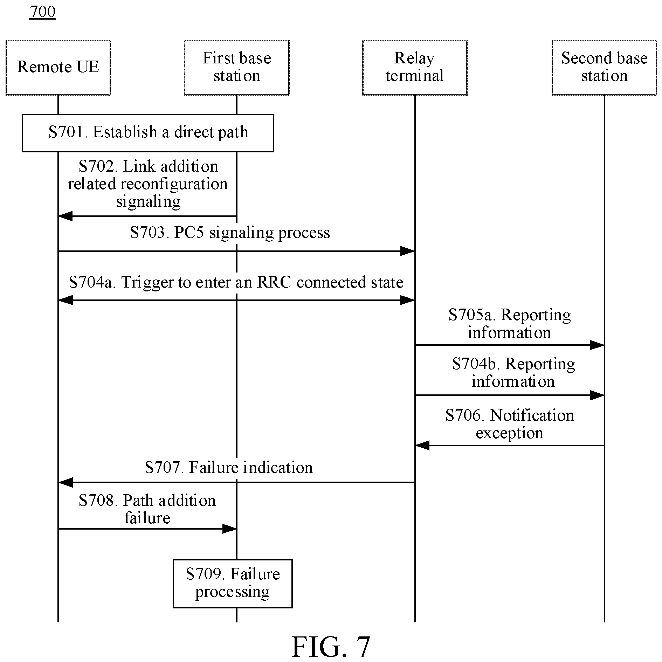

FIG. 7 is still another schematic flowchart of a multi-path establishment method according to an embodiment of this application. As shown in FIG. 7, the method 700 mainly includes the following steps.

In this embodiment, it is attempted not to change a process of cell selection/reselection/cell access of a relay UE, so as to achieve a process of adding a second path.

S701: A remote UE establishes a direct path to a serving base station of the remote UE.

The direct path may be used for basic data transmission. The base station may configure the remote UE to perform specific measurement based on the direct path to collect a measurement result of a surrounding cell and a relay UE.

When the serving base station of the remote UE decides to add a new indirect path to the remote UE, only a link quality condition between the relay UE and the remote UE is considered when a target relay UE is selected. For example, only one relay UE around the remote UE meets a basic PC5 communication condition and may provide a second path for the remote UE for auxiliary transmission.

For an RRC state problem of the relay UE, if the relay UE happens to be a UE in a connected state under a same serving base station as the remote UE, the serving base station may separately send a reconfiguration message to the relay UE and the remote UE by using RRC reconfiguration signaling, so as to perform various configuration on the second path of the remote UE.

For example, for the remote UE, the serving base station configures the following information:
1. PC5 radio link control (Radio Link Control, RLC) channel configuration on the remote UE side;
2. Mapping relationship between an E2E RB and a PC5 RLC channel of the remote UE;
3. Local identification ID, in the relay UE, of the remote UE used for a PCS interface;
4. Adaptation layer configuration used for the PCS interface.

For the relay UE, the serving base station configures the following information:
1. PCS RLC channel configuration on the relay UE side;
2. Mapping relationship between an E2E RB and a PC5 RLC channel of the remote UE;
3. Local identification ID, in the relay UE, of the remote UE used for a PCS interface;
4. Adaptation layer configuration used for the PCS interface.

In addition, the serving base station may further configure the following for the relay UE:
1. Uu RLC channel configuration;
2. Mapping relationship between an E2E RB and a Uu RLC channel of the remote UE;
3. Local identification ID, in the relay UE, of the remote UE used for a Uu interface;
4. Adaptation layer configuration used for the Uu interface.

In this case, the second path can be added successfully through implementation by the serving base station, thereby establishing multi-path transmission for the remote UE.

In the following steps, the relay UE is not in a connected state under the same base station. For example, the relay UE is in an idle/inactive state, or even the relay UE is in a connected state under another base station.

S702: After selecting a relay UE, the serving base station of the remote UE sends reconfiguration signaling related to link addition to the remote UE, where the reconfiguration signaling carries a relay UE identifier, for example, a Layer-2 ID.

S703: The remote UE performs, according to the relay UE ID sent by the serving base station, a PC5 signaling process for a purpose of adding multiple paths to the relay UE, for example, a PC5-S connection establishment request/PC5 RRC connection establishment process request.

After receiving the PC5-S connection establishment or PC5 RRC connection establishment process request of the remote UE, the relay UE may perform S704a or S704b.

S704a: Upon receiving a request of the PC5-S connection establishment/PC5 RRC connection establishment process of the remote UE, the relay UE immediately triggers to enter an RRC connected state, where a current camped cell of the relay UE is a cell for which the relay UE selects to perform an RRC connection establishment request, that is, the relay UE does not perform an operation of cell reselection or changing an accessed cell, but directly enters a connected state from the camped cell according to a process of the original UE and then performs S705a.

S705a: When the camped cell of the relay UE and the serving cell of the remote UE are under different base stations, the relay UE that enters the connected state reports the Layer-2 ID of the relay UE by using SUI (Sidelink UE Information) or UAI (UE Assistance information) to the serving base station of the relay UE, and carries a second path addition purpose in a role of a relay, that is, the relay UE needs to explicitly notify the network that the relay UE reports the Layer-2 ID this time, and does not perform normal PC5 communication, nor serves as a relay UE in the relay link, but serves as a relay in a multi-path scenario, so that the network side can identify the purpose; and then performs S706.

S704b: When receiving PCS signaling sent by the remote UE and carrying a request for a purpose of establishing a second path, and the relay UE itself is a UE in a connected state, the relay UE may directly report to a serving cell of the relay UE. For example, the relay UE reports the Layer-2 ID of the relay UE by using SUI (Sidelink UE Information) or UAI (UE Assistance information) to the serving base station of the relay UE, and carries a second path addition purpose in a role of a relay, that is, the relay UE needs to explicitly notify the network that the relay UE reports the Layer-2 ID this time, and does not perform normal PCS communication, nor serves as a relay UE in the relay link, but serves as a relay in a multi-path scenario, so that the network side can identify the purpose; and then performs S706.

S706: After receiving the report of the relay UE in a role of a relay in addition of a second path, the serving base station of the relay UE finds that the serving base station of the relay UE does not add/start a related second path configuration process, and determines that a case of cross-base station or another error occurs. For example, the relay UE and the remote UE are under different serving base stations, or an unexpected or accidental update occurs to the Layer-2 ID of the relay UE, so that addition of the second path cannot be smoothly performed. Therefore, the serving base station of the relay UE may notify the relay UE of this abnormal process. For example, in an explicit signaling manner, an implicit signaling manner, or even the relay UE is directly released, to notify that addition of the second path in a role of a relay UE cannot be supported. In particular, a failure cause indication may also be carried.

S707: The relay UE that receives the indication that the serving base station of the relay UE cannot complete addition of the second path feeds back a failure indication to the remote UE by using PCS interface signaling. For example, when the failure is notified by using an independent signaling process, or a request for a purpose of adding a PC5 multi-path is previously received, a reply with complete (complete) is suspended, and in this case, reject (reject) is directly replied with. In summary, the remote UE is notified that the second path cannot be added, and a failure cause indication or a serving cell ID of the relay UE may also be carried.

S708: The remote UE receives the failure indication, and feeds back to the serving base station of the remote UE that the addition process of the second path cannot be successfully performed. For example, when the path addition failure is reported by using an independent Uu signaling process, or a reconfiguration of a purpose of adding a second path from the serving base station is previously received, a reply with complete (complete) is suspended, and in this case, reject (reject) is directly replied with. In summary, the remote UE notifies the serving base station that addition of the second path cannot be performed, and particularly, the failure reason indication or the serving cell ID of the relay UE may also be carried.

S709: After receiving the indication, the serving base station of the remote UE learns that the previously selected relay UE service fails to add the second path, and may perform failure processing. For example, a path addition process is ended. Optionally, the serving base station may also try a new relay UE again.

According to the multi-path establishment method provided in this embodiment of this application, an execution body may be a multi-path establishment apparatus. In this embodiment of this application, an example in which the multi-path establishment apparatus performs the multi-path establishment method is used to describe the multi-path establishment apparatus provided in this embodiment of this application.

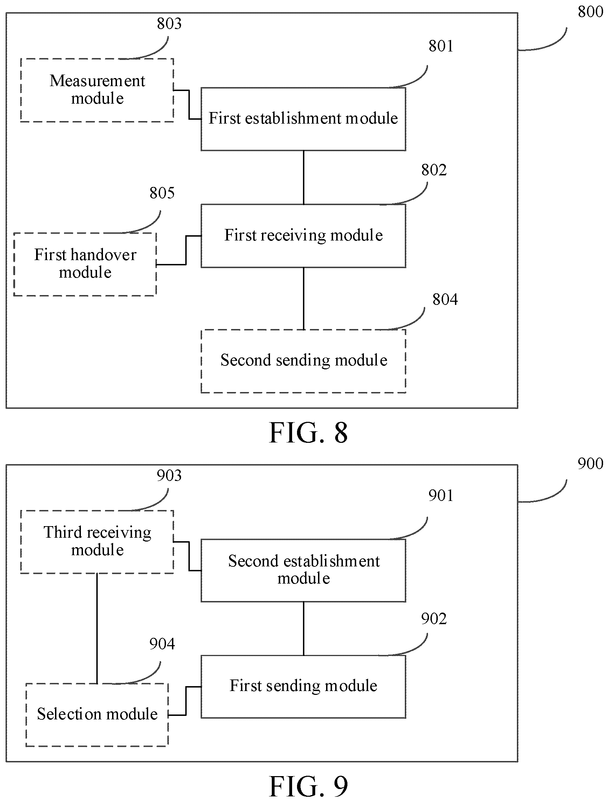

FIG. 8 is a schematic structural diagram of a multi-path establishment apparatus according to an embodiment of this application. As shown in FIG. 8, the apparatus 800 mainly includes: a first establishment module 801 and a first receiving module 802.

In this embodiment of this application, the first establishment module 801 is configured to establish a first path with a first base station, where the first path is a direct path between the first terminal and the first base station; and the first receiving module 802 is configured to receive path addition signaling sent by the first base station, where the path addition signaling carries an identifier of a second terminal through which a second path passes, and the second path is an indirect path between the first terminal and the first base station.

In a possible implementation, as shown in FIG. 8, the apparatus may further include: a measurement module 803, configured to measure signal quality of a measurement object according to measurement configuration information sent by the first base station, where the measurement object includes: at least one adjacent terminal; and send a measurement result of at least one candidate terminal to the first base station, where the at least one candidate terminal is an adjacent terminal that is among the at least one adjacent terminal and that meets a reporting condition.

In a possible implementation, that the measurement module 803 measures the signal quality of the measurement object includes one of the following:
measuring signal quality of the adjacent terminal based on discovery signaling sent by the adjacent terminal; and
measuring the signal quality of the adjacent terminal based on a data signal transmitted by the adjacent terminal through a PCS interface.

In a possible implementation, the discovery signaling carries serving cell information of the adj acent terminal and/or radio resource control RRC state information of the adjacent terminal.

In a possible implementation, the reported measurement result further includes serving cell information of the candidate terminal and/or RRC state information of the candidate terminal.

In a possible implementation, as shown in FIG. 8, the apparatus further includes: a second sending module 804, configured to send a first request to the second terminal based on the identifier of the second terminal, where the first request is used to request to establish a PCS link with the second terminal.

In a possible implementation, target PCS signaling sent to the second terminal carries first indication information, where the first indication information indicates that a purpose of requesting to establish a PCS link is to add the second path to the first terminal, and the target PCS signaling includes the first request or PCS signaling sent to the second terminal after the first request.

In a possible implementation, the path addition signaling further carries a first cell list recommended for access by the second terminal.

In a possible implementation, the target PCS signaling further carries at least one of the following: the first cell list and serving cell information of the first terminal.

In a possible implementation, the first receiving module 802 is further configured to perform at least one of the following:
receiving a first response returned by the second terminal, and establishing a PC5 link with the second terminal;
receiving first notification information sent by the second terminal through the PCS interface, where the first notification information indicates that the second path fails to be added; and
receiving a second response sent by the second terminal, where the second response indicates that the second terminal rejects the first request.

In a possible implementation, the first notification information includes at least one of the following: a cause indication of failing to add the second path and a serving cell identifier of the second terminal.

In a possible implementation, the second response carries at least one of the following: a rejection cause indication and a serving cell identifier of the second terminal.

In a possible implementation, the first receiving module 802 is further configured to receive a handover command sent by the first base station, where the handover command indicates the first terminal to hand over to a second base station, and the second base station is a serving base station of the second terminal; and the apparatus may further include: a first switching module 805, configured to hand over to the second base station based on the handover command.

In a possible implementation, the first receiving module 802 is further configured to perform at least one of the following:
receiving path addition signaling sent by the second base station, where the path addition signaling indicates to add a second path for the first terminal to reach the second base station via the second terminal; and
receiving first RRC reconfiguration signaling sent by the second base station, and performing configuration of the second path based on the second RRC reconfiguration signaling, where the first RRC reconfiguration signaling is used to configure a PCS interface of the second path of the first terminal.

In a possible implementation, the first receiving module 802 is further configured to receive second RRC reconfiguration signaling sent by the first base station, where the second RRC reconfiguration signaling is used to configure a PCS interface of the second path of the first terminal; and perform configuration of the second path based on the second RRC reconfiguration signaling.

FIG. 9 is another schematic structural diagram of a multi-path establishment apparatus according to an embodiment of this application. The apparatus is applied to a first base station. As shown in FIG. 9, the apparatus 900 mainly includes: a second establishment module 901 and a first sending module 902.

In this embodiment of this application, the second establishment module 901 is configured to establish a first path with a first terminal, where the first path is a direct path between the first terminal and a first base station; and the first sending module 902 is configured to send path addition signaling to the first terminal through the first path, where the path addition signaling carries an identifier of a second terminal through which a second path passes, and the second path is an indirect path between the first terminal and the first base station.

In a possible implementation, the first sending module 902 is further configured to send measurement configuration information to the first terminal, where the measurement configuration information indicates the first terminal to measure signal quality of at least one adjacent terminal; as shown in FIG. 9, the apparatus may further include: a third receiving module 903, configured to receive a measurement result of at least one candidate terminal sent by the first terminal, where the at least one candidate terminal is an adjacent terminal that is among the at least one adjacent terminal and that meets a reporting condition; and a selection module 904, configured to select one candidate terminal from the at least one candidate terminal as the second terminal based on the measurement result.

In a possible implementation, the measurement result further includes: serving cell information of the candidate terminal and/or RRC state information of the candidate terminal.

In a possible implementation, that the selection module 904 selects one candidate terminal from the at least one candidate terminal as the second terminal based on the measurement result includes at least one of the following:
selecting a candidate terminal with best PCS link quality from the at least one candidate terminal as the second terminal;
in a case in which the at least one candidate terminal includes a candidate terminal in a connected state under the first base station, selecting a candidate terminal in a connected state under the first base station as the second terminal;
in a case in which the at least one candidate terminal does not include a candidate terminal in a connected state under the first base station, selecting a candidate terminal in a non-connected state under the first base station from the at least one candidate terminal as the second terminal;
in a case in which none of the at least one candidate terminal is under the first base station, selecting a candidate terminal in a non-connected state from the at least one candidate terminal as the second terminal; and
in a case in which none of the at least one candidate terminal is under the first base station and the at least one candidate terminal is in a connected state, selecting a candidate terminal in a connected state from the at least one candidate terminal as the second terminal.

In a possible implementation, the path addition signaling further carries a first cell list recommended for access by the second terminal.

In a possible implementation, the first sending module 902 is further configured to send a handover command to the first terminal, where the handover command indicates the first terminal to hand over to a second base station, and the second base station is a base station in which the second terminal is located.

In a possible implementation, the first sending module 902 is further configured to send indication signaling to the second base station, so as to indicate the second base station to trigger the second terminal to be handed over to the first base station.

In a possible implementation, the apparatus further includes: a third receiving module 903, further configured to receive reporting information sent by the second terminal, where the reporting information includes the identifier of the second terminal and/or second indication information, and the second indication information indicates that the second terminal is to add a second path in a role of a relay.

In a possible implementation, the first sending module 902 is further configured to:
send second RRC reconfiguration signaling to the first terminal, where the second RRC reconfiguration signaling is used to configure a PCS interface of the second path of the first terminal; and
send second RRC reconfiguration signaling to the second terminal, where the second RRC reconfiguration signaling is used to configure a PC5 interface and/or a Uu interface of the second path on the second terminal.

In a possible implementation, the first sending module 902 is further configured to determine that both the first terminal and the second terminal are within a service range of the first base station.

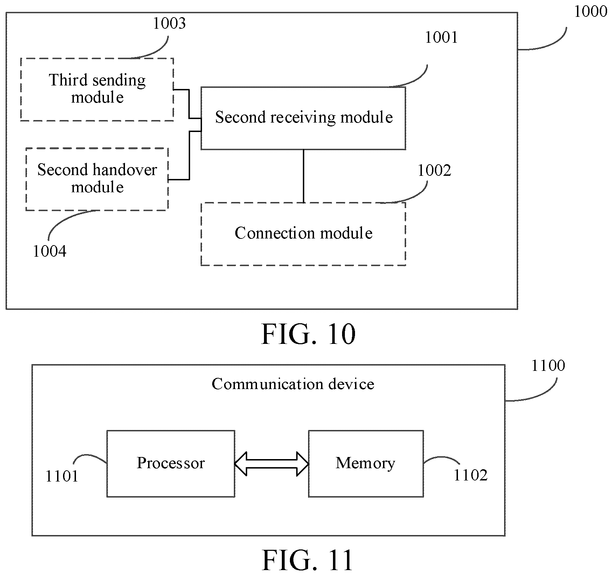

FIG. 10 is another schematic structural diagram of a multi-path establishment apparatus according to an embodiment of this application. The apparatus is applied to a second terminal. As shown in FIG. 10, the apparatus 1000 mainly includes: a second receiving module 1001.

In this embodiment of this application, the second receiving module 1001 is configured to receive a first request sent by a first terminal, where the first request is used to request to establish a PC5 link with the second terminal.

In a possible implementation, target PCS signaling sent by the first terminal carries first indication information, where the first indication information indicates that a purpose of requesting to establish a PCS link is to add the second path to the first terminal, and the target PCS signaling includes the first request or PC5 signaling sent to the second terminal after the first request.

In a possible implementation, the target PCS signaling further carries at least one of the following: a first cell list recommended for access by the second terminal and serving cell information of the first terminal.

In a possible implementation, as shown in FIG. 10, the apparatus further includes a connection module 1002, configured to perform at least one of the following:
in a case in which a cell in the first cell list meets a cell selection condition or a cell reselection condition, selecting, from the first cell list, a cell that meets the cell selection condition or the cell reselection condition as a serving cell for which connection establishment is initiated; and
in a case in which a serving cell of the first terminal meets the cell selection condition or the cell reselection condition, selecting the serving cell of the first terminal as a serving cell for which connection establishment is initiated.

In a possible implementation, the apparatus further includes: a third sending module 1003, configured to: in a case in which a second base station on which the second terminal in a connected state is located is different from the first base station, send a rejection response to the first terminal, where the rejection response indicates that the second terminal rejects a PCS link establishment request.

In a possible implementation, the second receiving module 1001 is further configured to receive a handover command sent by a second base station, where the handover command indicates the second terminal to hand over from the second base station to the first base station; and the apparatus further includes: a second handover module 1004, configured to hand over to the first base station.

In a possible implementation, the apparatus further includes a third sending module 1003, configured to send reporting information to a second base station, where the second base station is a serving base station of the second terminal, the reporting information includes an identifier of the second terminal and second indication information, and the second indication information indicates that the second terminal is to add a second path in a role of a relay.

In a possible implementation, the second receiving module 1001 is further configured to perform at least one of the following:
receive third RRC reconfiguration signaling sent by the second base station, where the third RRC reconfiguration signaling is used to configure a PC5 interface and/or a Uu interface of the second path on the second terminal; and
receive second notification information sent by the second base station, where the second notification information indicates that addition of a second path by the second terminal in a role of a relay is rejected.

In a possible implementation, the apparatus further includes a third sending module 1003, configured to send first notification information to the first terminal through a PCS interface, where the first notification information indicates that the second path fails to be added; or send a rejection response to the first terminal, where the rejection response indicates that the second terminal rejects the first request.

In a possible implementation, the first notification information further includes at least one of the following: a failure cause indication and serving cell information of the second terminal.

The multi-path establishment apparatus in this embodiment of this application may be an electronic device, for example, an electronic device with an operating system, or may be a component in the electronic device, for example, an integrated circuit or a chip. The electronic device may be a terminal, or may be another device except the terminal. For example, the terminal may include but is not limited to the type of the foregoing listed terminal 11. Another device may be a server, a network attached storage (Network Attached Storage, NAS), or the like. This is not specifically limited in this embodiment of this application.

The multi-path establishment apparatus provided in this embodiment of this application can implement various processes realized in the method embodiments of FIG. 2 to FIG. 7, and achieve the same technical effects. To avoid repetition, details are not described herein.

Optionally, as shown in FIG. 11, an embodiment of this application further provides a communication device 1100, including a processor 1101 and a memory 1102, and a program or instructions capable of running on the processor 1101 are stored in the memory 1102. For example, when the communication device 1100 is a terminal, each step of the embodiment of the multi-path establishment method 200 or 400 is implemented when the program or the instructions are executed by the processor 1101, and a same technical effect can be achieved. When the communication device 1100 is a network side device, each step of the method embodiment of the multi-path establishment method 300 is implemented when the program or the instructions are executed by the processor 1101, and a same technical effect can be achieved. To avoid repetition, details are not described herein again.

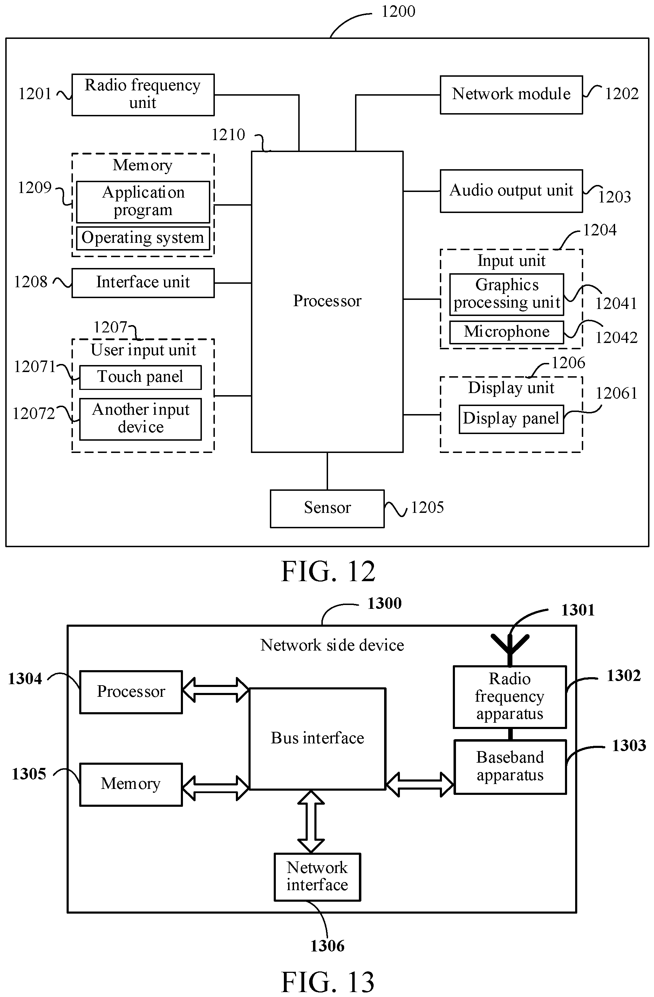

An embodiment of this application further provides a terminal, including a processor and a communication interface, where the processor is configured to implement each step of the embodiment of the foregoing multi-path establishment method 200 or 400, and the communication interface is configured to communicate with an external device. This terminal embodiment is corresponding to the foregoing terminal-side method embodiment. Each implementation process and implementation of the foregoing method embodiment may be applied to this terminal embodiment, and a same technical effect can be achieved. Specifically, FIG. 12 is a schematic diagram of a hardware structure of a terminal according to an embodiment of this application.

The terminal 1200 includes, but is not limited to: at least some components of a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art may understand that the terminal 1200 may further include a power supply (for example, a battery) that supplies power to each component. The power supply may be logically connected to the processor 1210 by using a power management system, so as to manage functions such as charging, discharging, and power consumption by using the power management system. The terminal structure shown in FIG. 12 constitutes no limitation on the terminal, and the terminal may include more or fewer components than those shown in the figure, or combine some components, or have different component arrangements.

It should be understood that, in this embodiment of this application, the input unit 1204 may include a graphics processing unit (Graphics Processing Unit, GPU) 12041 and a microphone 12042. The GPU 12041 processes image data of a still picture or a video obtained by an image capture apparatus (such as a camera) in a video capture mode or an image capture mode. The display unit 1206 may include a display panel 12061. The display panel 12061 may be configured in a form such as a liquid crystal display or an organic light-emitting diode. The user input unit 1207 may include at least one of a touch panel 12071 and another input device 12072. The touch panel 12071 is also referred to as a touchscreen. The touch panel 12071 may include two parts: a touch detection apparatus and a touch controller. The another input device 12072 may include but is not limited to a physical keyboard, a function key (such as a volume control key or an on/off key), a trackball, a mouse, and a joystick. Details are not described herein.

In this embodiment of this application, the radio frequency unit 1201 receives downlink data from the network side device and may transmit the downlink data to the processor 1210 for processing. In addition, the radio frequency unit 1201 may send uplink data to the network side device. Generally, the radio frequency unit 1201 includes but is not limited to: an antenna, an amplifier, a transceiver, a coupler, a low noise amplifier, and a duplexer.

The memory 1209 may be configured to store a software program, instructions, and various data. The memory 1209 may mainly include a first storage area for storing a program or instructions and a second storage area for storing data, where the first storage area may store an operating system, an application program or instructions (such as a sound playback function or an image playback function) required by at least one function, and the like. In addition, the memory 1209 may include a volatile memory or a non-volatile memory, or the memory 1209 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1209 in this embodiment of this application includes but is not limited to these and any other suitable type of memory.

The processor 1210 may include one or more processing units. Optionally, the processor 1210 integrates an application processor and a modem processor, where the application processor mainly processes operations involving an operating system, a user interface, an application program, or the like, and the modem processor mainly processes a wireless communication signal, such as a baseband processor. It may be understood that the modem processor may not be integrated into the processor 1210.

The radio frequency unit 1201 is configured to receive, through a first path to a first base station, path addition signaling sent by the first base station, where the first path is a direct path between the first terminal and the first base station, the path addition signaling carries an identifier of a second terminal through which a second path passes, and the second path is an indirect path between the first terminal and the first base station; or receive a first request sent by a first terminal, where the first request is used to request to establish a PCS link with the second terminal.

An embodiment of this application further provides a network side device, including a processor and a communication interface, where the processor is configured to implement each step in the foregoing multi-path establishment method 300, and the communication interface is configured to communicate with an external device. The network side device embodiment is corresponding to the foregoing network side device method embodiment. Each implementation process and implementation of the foregoing method embodiment may be applicable to the network side device embodiment, and a same technical effect can be achieved.

Specifically, an embodiment of this application further provides a network side device. As shown in FIG. 13, a network side device 1300 includes: an antenna 1301, a radio frequency apparatus 1302, a baseband apparatus 1303, a processor 1304, and a memory 1305. The antenna 1301 is connected to the radio frequency apparatus 1302. In an uplink direction, the radio frequency apparatus 1302 receives information by using the antenna 1301, and sends the received information to the baseband apparatus 1303 for processing. In a downlink direction, the baseband apparatus 1303 processes information that needs to be sent, and sends processed information to the radio frequency apparatus 1302. The radio frequency apparatus 1302 processes the received information, and sends processed information by using the antenna 1301.

In the foregoing embodiment, the method performed by the network side device may be implemented in the baseband apparatus 1303. The baseband apparatus 1303 includes a baseband processor.

The baseband apparatus 1303 may include, for example, at least one baseband board, where a plurality of chips are disposed on the baseband board. As shown in FIG. 13, one chip is, for example, the baseband processor, which is connected to the memory 1305 through a bus interface, so as to schedule a program in the memory 1305 to perform an operation of the network device shown in the foregoing method embodiment.

The network side device may further include a network interface 1306, and the interface is, for example, a common public radio interface (common public radio interface, CPRI).

Specifically, the network side device 1300 of this embodiment of the present invention further includes: instructions or a program stored in the memory 1305 and capable of running on the processor 1304. The processor 1304 invokes the instructions or the program in the memory 1305 to perform the method performed by the modules shown in FIG. 9, and achieves a same technical effect. To avoid repetition, details are not described herein again.

An embodiment of this application further provides a readable storage medium. The readable storage medium stores a program or instructions. When the program or the instructions is or are executed by a processor, various processes in the multi-path establishment method 200, 300, or 400 are implemented, and a same technical effect can be achieved. To avoid repetition, details are not described herein again.

The processor is a processor in the terminal in the foregoing embodiment. The readable storage medium includes a computer-readable storage medium such as a read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement various processes in the embodiment of the multi-path establishment method 200, 300, or 400, and a same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a storage medium, and the computer program/program product is executed by at least one processor to implement each process in the embodiment of the multi-path establishment method 200, 300, or 400, and can achieve a same technical effect. To avoid repetition, details are not described herein again.

An embodiment of this application further provides a multi-path establishment system, including: a first terminal, a second terminal, and a network side device, where the first terminal may be configured to perform each step of the multi-path establishment method 200, the network side device may be configured to perform each step of the multi-path establishment method 300, and the second terminal may be configured to perform each step of the multi-path establishment method 400.

It should be noted that, the terms "include", "comprise", or any other variation thereof in this specification are intended to cover a non-exclusive inclusion, so that a process, method, article, or apparatus that includes a list of elements includes the elements, and also includes other elements that are not expressly listed, or further includes elements inherent to such a process, method, article, or apparatus. Without more limitations, elements defined by the sentence "including one" does not exclude that there are still other same elements in the processes, methods, objects, or apparatuses that include the elements. In addition, it should be noted that the scope of the method and apparatus in the embodiments of this application is not limited to performing a function in a sequence shown or discussed, and may further include performing a function in a basically simultaneous manner or in a reverse sequence based on a related function. For example, the described method may be performed in an order from the described order, and various steps may be added, omitted, or combined. In addition, features described with reference to some examples may be combined in other examples.

Based on the descriptions in the foregoing implementations, a person skilled in the art may clearly learn that the method in the foregoing embodiment may be implemented by software in addition to a necessary universal hardware platform or by hardware only. In most circumstances, the former is a better implementation. Based on such an understanding, the technical solutions of this application essentially, or the part contributing to the prior art, may be presented in the form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. The foregoing specific implementations are merely examples, and are not restrictive. Under the enlightenment of this application, many forms may be further made by a person of ordinary skill in the art without departing from the objective of this application and the protection scope of the claims and shall fall within the protection scope of this application.

## Claims

1. A multi-path establishment method, comprising:
receiving, by a first terminal through a first path to a first base station, path addition signaling sent by the first base station, wherein the first path is a direct path between the first terminal and the first base station, the path addition signaling carries an identifier of a second terminal through which a second path passes, and the second path is an indirect path between the first terminal and the first base station.

2. The method according to claim 1, wherein before the receiving, by a first terminal, path addition signaling sent by the first base station, the method further comprises:
measuring, by the first terminal, signal quality of a measurement object according to measurement configuration information sent by the first base station, wherein the measurement object comprises: at least one adjacent terminal; and
sending, by the first terminal, a measurement result of at least one candidate terminal to the first base station, wherein the at least one candidate terminal is an adjacent terminal that is among the at least one adjacent terminal and that meets a reporting condition.

3. The method according to claim 2, wherein the measuring, by the first terminal, signal quality of a measurement object comprises one of the following:
measuring, by the first terminal, signal quality of the adj acent terminal based on discovery signaling sent by the adjacent terminal; and
measuring, by the first terminal, the signal quality of the adjacent terminal based on a data signal transmitted by the adjacent terminal through a PCS interface.

4. The method according to claim 3, wherein the discovery signaling carries serving cell information of the adj acent terminal and/or radio resource control RRC state information of the adjacent terminal, wherein the RRC state information indicates that the adjacent terminal is in an RRC connected state or the RRC state information indicates that the adjacent terminal is in an RRC non-connected state.

5. The method according to claim 4, wherein the measurement result reported by the first terminal further comprises serving cell information of the candidate terminal and/or RRC state information of the candidate terminal.

6. The method according to any one of claims 1 to 5, wherein after the receiving, by a first terminal through a first path to a first base station, path addition signaling sent by the first base station, the method further comprises:
sending, by the first terminal, a first request to the second terminal based on the identifier of the second terminal, wherein the first request is used to request to establish a PCS link with the second terminal.

7. The method according to claim 6, wherein target PCS signaling sent by the first terminal to the second terminal carries first indication information, wherein the first indication information indicates that a purpose of requesting to establish a PC5 link is to add the second path to the first terminal, and the target PCS signaling comprises the first request or PC5 signaling sent to the second terminal after the first request.

8. The method according to claim 7, wherein the path addition signaling further carries a first cell list recommended for access by the second terminal.

9. The method according to claim 8, wherein the target PCS signaling further carries at least one of the following: the first cell list and serving cell information of the first terminal.

10. The method according to any one of claims 7 to 9, wherein after the first terminal sends the first request to the second terminal through a PCS interface, the method further comprises at least one of the following:
receiving, by the first terminal, a first response returned by the second terminal, and establishing a PCS link with the second terminal;
receiving, by the first terminal, first notification information sent by the second terminal through the PCS interface, wherein the first notification information indicates that the second path fails to be added; and
receiving, by the first terminal, a second response sent by the second terminal, wherein the second response indicates that the second terminal rejects the first request.

11. The method according to claim 10, wherein the first notification information comprises at least one of the following: a cause indication of failing to add the second path and a serving cell identifier of the second terminal.

12. The method according to claim 10, wherein the second response carries at least one of the following: a rejection cause indication and a serving cell identifier of the second terminal.

13. The method according to any one of claims 1 to 5, wherein the method further comprises:
receiving, by the first terminal, a handover command sent by the first base station, wherein the handover command indicates the first terminal to hand over to a second base station, and the second base station is a serving base station of the second terminal; and
handing over, by the first terminal, to the second base station based on the handover command.

14. The method according to claim 13, wherein after the handing over, by the first terminal, to the second base station based on the handover command, the method further comprises at least one of the following:
receiving, by the first terminal, path addition signaling sent by the second base station, wherein the path addition signaling sent by the second base station indicates to add a second path for the first terminal to reach the second base station via the second terminal; and
receiving, by the first terminal, first RRC reconfiguration signaling sent by the second base station, and performing configuration of the second path based on the first RRC reconfiguration signaling, wherein the first RRC reconfiguration signaling is used to configure a PCS interface of the second path of the first terminal.

15. The method according to any one of claims 1 to 9, wherein the method further comprises:
receiving, by the first terminal, second RRC reconfiguration signaling sent by the first base station, wherein the second RRC reconfiguration signaling is used to configure a PCS interface of the second path of the first terminal; and
performing, by the first terminal, configuration of the second path based on the second RRC reconfiguration signaling.

16. A multi-path establishment method, comprising:
sending, by a first base station, path addition signaling to a first terminal through a first path to the first terminal, wherein the first path is a direct path between the first terminal and the first base station, the path addition signaling carries an identifier of a second terminal through which a second path passes, and the second path is an indirect path between the first terminal and the first base station.

17. The method according to claim 16, wherein before the sending, by a first base station, path addition signaling to a first terminal through a first path to the first terminal, the method further comprises:
sending, by the first base station, measurement configuration information to the first terminal, wherein the measurement configuration information indicates the first terminal to measure signal quality of at least one adjacent terminal;
receiving a measurement result of at least one candidate terminal sent by the first terminal, wherein the at least one candidate terminal is an adjacent terminal that is among the at least one adjacent terminal and that meets a reporting condition; and
selecting, by the first base station, a candidate terminal from the at least one candidate terminal as the second terminal based on the measurement result.

18. The method according to claim 17, wherein the measurement result further comprises: serving cell information of the candidate terminal and/or RRC state information of the candidate terminal.

19. The method according to claim 17, wherein the selecting, by the first base station, a candidate terminal from the at least one candidate terminal as the second terminal based on the measurement result comprises at least one of the following:
selecting, by the first base station, a candidate terminal with best PCS link quality from the at least one candidate terminal as the second terminal;
in a case in which the at least one candidate terminal comprises a candidate terminal in a connected state under the first base station, selecting a candidate terminal in a connected state under the first base station as the second terminal;
in a case in which the at least one candidate terminal does not comprise a candidate terminal in a connected state under the first base station, selecting a candidate terminal in a non-connected state under the first base station from the at least one candidate terminal as the second terminal;
in a case in which none of the at least one candidate terminal is under the first base station, selecting a candidate terminal in a non-connected state from the at least one candidate terminal as the second terminal; and
in a case in which none of the at least one candidate terminal is under the first base station and the at least one candidate terminal is in a connected state, selecting a candidate terminal in a connected state from the at least one candidate terminal as the second terminal.

20. The method according to claim 19, wherein the path addition signaling further carries a first cell list recommended for access by the second terminal.

21. The method according to claim 19, wherein the method further comprises:
sending, by the first base station, a handover command to the first terminal, wherein the handover command indicates the first terminal to hand over to a second base station, and the second base station is a base station in which the second terminal is located.

22. The method according to claim 19, wherein the method further comprises:
sending, by the first base station, indication signaling to a second base station, to indicate the second base station to trigger the second terminal to be handed over to the first base station.

23. The method according to any one of claims 16 to 20 and 22, wherein after the sending, by a first base station, path addition signaling to a first terminal through a first path to the first terminal, the method further comprises:
receiving, by the first base station, reporting information sent by the second terminal, wherein the reporting information comprises the identifier of the second terminal and/or second indication information, and the second indication information indicates that the second terminal is to add a second path in a role of a relay.

24. The method according to any one of claims 16 to 20 and 22 to 23, wherein the method further comprises one of the following:
sending, by the first base station, second RRC reconfiguration signaling to the first terminal, wherein the second RRC reconfiguration signaling is used to configure a PC5 interface of the second path of the first terminal; and
sending, by the first base station, second RRC reconfiguration signaling to the second terminal, wherein the second RRC reconfiguration signaling is used to configure a PC5 interface and/or a Uu interface of the second path on the second terminal.

25. The method according to claim 23, wherein before the sending, by the first base station, second RRC reconfiguration signaling to the first terminal, the method further comprises:
determining, by the first base station, that both the first terminal and the second terminal are within a service range of the first base station.

26. A multi-path establishment method, comprising:
receiving, by a second terminal, a first request sent by a first terminal, wherein the first request is used to request to establish a PC5 link with the second terminal.

27. The method according to claim 26, wherein target PC5 signaling sent by the first terminal to the second terminal carries first indication information, wherein the first indication information indicates that a purpose of requesting to establish a PC5 link is to add the second path to the first terminal, and the target PC5 signaling comprises the first request or PC5 signaling sent to the second terminal after the first request.

28. The method according to claim 27, wherein the target PC5 signaling further carries at least one of the following: a first cell list recommended for access by the second terminal and serving cell information of the first terminal.

29. The method according to claim 28, wherein after the receiving, by a second terminal, a first request sent by a first terminal, the method further comprises one of the following:
in a case in which a cell in the first cell list meets a cell selection condition or a cell reselection condition, selecting, by the second terminal in a non-connected state from the first cell list, a cell that meets the cell selection condition or the cell reselection condition as a serving cell for which connection establishment is initiated; and
in a case in which a serving cell of the first terminal meets the cell selection condition or the cell reselection condition, selecting, by the second terminal in a non-connected state, the serving cell of the first terminal as a serving cell for which connection establishment is initiated.

30. The method according to claim 28, wherein after the receiving, by a second terminal, a first request sent by a first terminal, the method further comprises:
in a case in which a second base station on which the second terminal in a connected state is located is different from a first base station, sending, by the second terminal, a rejection response to the first terminal, wherein the rejection response indicates that the second terminal rejects a PC5 link establishment request.

31. The method according to claim 28, wherein before the receiving, by a second terminal, a first request sent by a first terminal, the method further comprises:
receiving, by the second terminal, a handover command sent by a second base station, wherein the handover command indicates the second terminal to hand over from the second base station to a first base station; and
handing over, by the second terminal, to the first base station.

32. The method according to claim 27, wherein after the receiving, by a second terminal, a first request sent by a first terminal, the method further comprises:
sending, by the second terminal, reporting information to a second base station, wherein the second base station is a serving base station of the second terminal, the reporting information comprises an identifier of the second terminal and second indication information, and the second indication information indicates that the second terminal is to add a second path in a role of a relay.

33. The method according to claim 32, wherein after the sending, by the second terminal, reporting information to a second base station, the method further comprises one of the following:
receiving, by the second terminal, third RRC reconfiguration signaling sent by the second base station, wherein the third RRC reconfiguration signaling is used to configure a PC5 interface and/or a Uu interface of the second path on the second terminal; and
receiving, by the second terminal, second notification information sent by the second base station, wherein the second notification information indicates that addition of a second path by the second terminal in a role of a relay is rejected.

34. The method according to claim 33, wherein after the receiving, by the second terminal, second notification information sent by the second base station, the method further comprises:
sending, by the second terminal, first notification information to the first terminal through a PC5 interface, wherein the first notification information indicates that the second path fails to be added; or
sending, by the second terminal, a rejection response to the first terminal, wherein the rejection response indicates that the second terminal rejects the first request.

35. The method according to claim 34, wherein the first notification information further comprises at least one of the following: a failure cause indication and serving cell information of the second terminal.

36. A multi-path establishment apparatus, comprising:
a first establishment module, configured to establish a first path with a first base station, wherein the first path is a direct path between the first terminal and the first base station; and
a first receiving module, configured to receive path addition signaling sent by the first base station, wherein the path addition signaling carries an identifier of a second terminal through which a second path passes, and the second path is an indirect path between the first terminal and the first base station.

37. A multi-path establishment apparatus, comprising:
a second establishment module, configured to establish a first path with a first terminal, wherein the first path is a direct path between the first terminal and a first base station; and
a first sending module, configured to send path addition signaling to the first terminal through the first path, wherein the path addition signaling carries an identifier of a second terminal through which a second path passes, and the second path is an indirect path between the first terminal and the first base station.

38. A multi-path establishment apparatus, comprising:
a second receiving module, configured to receive a first request sent by a first terminal, wherein the first request is used to request to establish a PC5 link with the second terminal.

39. A terminal, comprising a processor and a memory, wherein the memory stores a program or instructions capable of running on the processor, and the program or the instructions are executed by the processor to implement the step of the multi-path establishment method according to any one of claims 1 to 15, or implement the step of the multi-path establishment method according to any one of claims 26 to 35.

40. A network side device, comprising a processor and a memory, wherein the memory stores a program or instructions capable of running on the processor, and the program or the instructions are executed by the processor to implement the step of the multi-path establishment method according to any one of claims 16 to 25.

41. A readable storage medium, wherein the readable storage medium stores a program or instructions, and the program or the instructions are executed by a processor to implement the step of the multi-path establishment method according to any one of claims 1 to 15, the step of the multi-path establishment method according to any one of claims 16 to 25, or the step of the multi-path establishment method according to any one of claims 26 to 35.
